# EUROPEAN PATENT APPLICATION

(11) **EP 2 790 365 A1**
(43) Date of publication of application: **15.10.2014**
(21) Application number: 12854683.5
(22) Date of filing: 26.11.2012
(51) Int. Cl.: H04L 27/02, H04B 3/50, H04L 12/413

(54) **COMMUNICATION DEVICE, COMMUNICATION SYSTEM, AND COMMUNICATION METHOD**

(30) Priority: 09.12.2011 JP 2011270698
(71) Applicant: Toyota Jidosha Kabushiki Kaisha, Toyota-shi, Aichi 471-8571 (JP)
(72) Inventor: GOTOU, Hideki, Aichi-ken, 471-8571 (JP); IIYAMA, Shinichi, Aichi-ken, 471-8571 (JP); YASUDA, Takashi, Aichi-ken, 471-8571 (JP); TAKAHASHI, Keigo, Aichi-ken, 471-8571 (JP); SHIBATA, Tsutayuki, Aichi-ken, 480-1192 (JP)
(74) Representative: TBK
(86) International application number: PCT/JP2012/080499
(87) International publication number: WO 2013/084741

(57) **Abstract**

A communication device is provided that readily increases the communication capacity of communication data based on a given protocol, without increasing the number of wired connections. The communication device sends and receives communication data through a communication line (21). A transmitting section (60) sends a communication signal (TS1) of modulated communication data (S1) to the communication line (21). A receiving section (50) demodulates a communication signal (TR1) received from the communication line (21) to obtain communication data (R1). The transmitting section (60) modulates the communication data (S1) on the basis of a frequency that varies dynamically within a predetermined transmission frequency band (F1). The receiving section (50) demodulates the received modulated communication signal corresponding to the transmission frequency band (F1), to obtain the communication data (R1).

## Description

### TECHNICAL FIELD

The present disclosure relates to a communication device to be connected to a communication network, for example, a communication network to be mounted in a vehicle. The communication device performs communications over the communication network. The present disclosure also relates to a communication system using the communication device, and also relates to a communication method to be used for the communication device.

### BACKGROUND ART

As is widely known, electronic control units (ECUs) mounted in a vehicle often constitute a vehicle network system by being network-connected to each other, and these electronic control units can mutually transmit and receive information owned by each, for example, vehicle information. A control area network (CAN) is included as one of the communication systems that configure such vehicle network systems. The CAN is a bus-type network in which nodes are connected to one bus, and for example, high-speed CAN specifications have been defined as a transmission rate of 500 kbps, the maximum bus length of 40 m, and the maximum number of connection nodes of 16. However, recently, with more ECUs being mounted in a vehicle, there is also an increasing demand on the CAN for an increase in communication capacity, such as an increase in the number of connection nodes. Patent Document 1 describes an example of a communication system that increases the communication capacity by using the CAN.

In the communication system of Patent Document 1, a first coupling capacitor is connected to a first end portion of a twisted pair cable serving as a communication line that transmits a differential signal of the CAN, and a second coupling capacitor is connected to a second end portion. In the communication system, CAN protocol data that is being communicated through the CAN communication line is superimposed with high-frequency data via the first coupling capacitor, and the high-frequency data superimposed on the CAN communication line is obtained via the second coupling capacitor. To the CAN communication line, for example, a CAN protocol signal is transmitted at 500 kbps, and a signal of high-frequency data is transmitted at 100 Mbps. Accordingly, in addition to the CAN protocol communication using the CAN, data communication at high frequency is also performed, which allows increasing the communication capacity.

### PRIOR ART DOCUMENTS

### Patent Documents

Patent Document 1: Japanese Laid-Open Patent Publication No. 2008-193606

### SUMMARY OF THE INVENTION

### Problems that the Invention is to Solve

According to the communication system of Patent Document 1 described above, the amount of data to be transmitted over the CAN surely increases. However, since the data communication at high frequency is a communication of image data that is not suitable for transmission in the CAN, the CAN protocol communication capacity cannot be increased in this communication system.

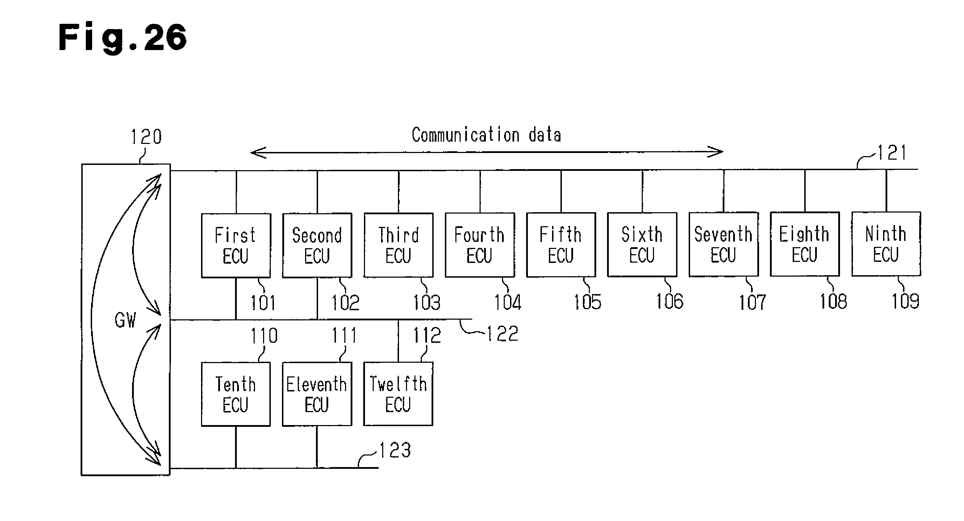

As shown in Fig. 26 of the present application, a configuration is also known in which CAN buses 121, 122, and 123 are connected via a gateway (GW) 120 that performs mutual transfer of communication data among the CAN buses 121, 122, and 123, so that communication data is transmittable among the first to twelfth ECUs 101 to 112 connected to the respective CAN buses 121 to 123. In this case, the number of nodes that can be connected to the communication system can be increased, however, the respective CAN buses 121 to 123 are not increased in communication capacity. An increase in data to be mutually transferred may adversely cause congestion of communication data.

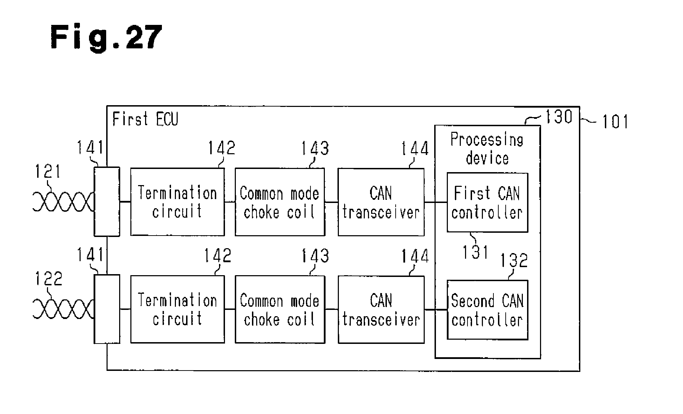

As shown in Fig. 27 of the present application, there is also a configuration in which a first ECU 101 has two communication sections each consisting of a set of a CAN transceiver 144, a common mode choke coil 143, a termination circuit 142, and a connector 141, and the respective communication sections are connected with a CAN bus 121 and a CAN bus 122, respectively. The first ECU 101 is accordingly increased in communication capacity because of the availability of the two CAN buses 121 and 122 for data communication. However, it is not easy to select communication data to be transmitted to only one bus. For realizing this selection, still another set of a CAN bus and a circuit to be connected to the CAN bus needs to be added. This unavoidably increases the costs and complicates the wiring.

It is an objective of the present disclosure to easily increase the communication capacity of communication data based on the same protocol without increasing the number of wirings. Means for Solving the Problems

In accordance with one aspect of the present disclosure, a communication device is provided that is connected to a communication line and configured to transmit and receive communication data via the communication line. The communication device includes a transmitting section for transmitting a communication signal into which the communication data is modulated to the communication line and a receiving section for obtaining communication data by demodulating the communication signal received from the communication line. The transmitting section is configured to modulate the communication data based on a frequency that varies dynamically within a predetermined transmission frequency band. The receiving section is configured to obtain the communication data by demodulating the received modulated communication signal corresponding to the frequency band.

In accordance with another aspect of the present disclosure, a communication system is provided that includes a plurality of communication devices which are communicably connected to a network. At least two of the communication devices each include a transmitting section for transmitting a communication signal to the network. The transmitting section is configured to transmit as the communication signal communication data modulated based on a frequency that varies dynamically within a predetermined transmission frequency band. At least one the communication devices includes a receiving section for obtaining communication data by demodulating a demodulated communication signal obtained from the network based on the transmission frequency band. The transmitting section is configured to control transmission of a communication signal from the transmitting section based on a comparison of a communication signal transmitted from the transmitting section and a signal being transmitted to the network.

In accordance with another aspect of the present aspect, a communication method for transmitting communication data that is communicated over a control area network is provided. A controller that controls the communication over the control area network outputs communication data. The communication method includes: modulating the communication data output from the controller based on a frequency that varies dynamically within a predetermined transmission frequency band; and transmitting the modulated communication data to the control area network.

In accordance with another aspect of the present disclosure, a communication method for receiving communication data that is communicated over a control area network is provided. A controller controls communication over the control area network. The communication method includes: receiving from the control area network a communication signal modulated based on a frequency that varies dynamically within a predetermined frequency band; demodulating the received communication signal in the predetermined frequency band; and outputting the demodulated communication signal to the controller as communication data.

In accordance with another aspect of the present disclosure, a communication device that is communicably connected to a control area network is provided. A controller controls communication over the control area network. The communication device is configured to modulate communication data output from the controller based on a frequency that varies dynamically within a predetermined transmission frequency band. The communication device is configured to transmit the modulated communication data to the control area network.

In accordance with another aspect of the present disclosure, a communication device that is communicably connected to a control area network is provided. A controller controls communication over the control area network. The communication device is configured to receive from the control area network a communication signal modulated based on a frequency that varies dynamically within a predetermined frequency band. The communication device is configured to obtain communication data by demodulating the received communication signal in the predetermined frequency band. The communication device is configured to output the demodulated communication data to the controller.

According to such configurations or methods, a communication signal is modulated by a frequency that fluctuates in a predetermined frequency range. Accordingly, even if two or more communication devices transmit communication signals of the same transmission frequency band to the communication line, interference of the communication signals with each other is suppressed. For example, the possibility that communication signals inverted in phase overlap each other to reach a level at which the communication signal is not detected is suppressed. Specifically, when two communication devices that are shifted by 180° in the phase of signals for modulation, that is, so-called carrier waves simultaneously output communication signals after modulation of the logic 0, in the communication line, the two communication signals differing 180° in phase may be overlapped with each other and the communication signals may be cancelled out. That is, although the two communication devices are both outputting a logic 0, a logic 1 may possibly be detected from the communication signal of the signal line. However, according to the configurations or methods of the present application, the carrier waves of the two communication devices are prevented from continuously overlapping with a phase of 180° by dynamically varying the frequency to be used for modulation in a range included within the transmission frequency band. For example, when a logic 0 is being output, even for a short time, a communication signal that allows detecting that a logic 0 is being output is transmitted to the signal line.

By dynamically varying the modulating frequency, a communication device that is transmitting a communication signal from the transmitting section monitors the communication signal via the receiving section. Accordingly, it can be detected that another communication signal is superimposed on the communication line. That is, the communication device can, by monitoring the existence of another communication signal, control transmission of a communication signal from its own communicating section.

Further, by changing the predetermined frequency band, frequency multiplex communication can be performed in the communication line.

According to this communication device, the communication capacity of communication data based on the same protocol can be increased, without increasing the number of wirings.

In accordance with one aspect, the dynamically changing frequency is determined based on a pseudorandom noise code.

According to such a configuration, since the frequency varies dynamically and randomly for each communication device, between two or more communication devices, a phase difference of the respective frequencies sequentially varies. Accordingly, even if two or more communication devices simultaneously transmit transmission signals, each communication device in transmission operation can detect that another communication signal is being transmitted.

In accordance with one aspect, the communication line is a communication line based on a standard for a control area network. The communication data is communication data based on a protocol of the control area network.

According to such a configuration, a communication device to which a control area network, so-called CAN, is applied allows increasing the communication traffic volume of communication data based on the CAN protocol, without increasing the number of wirings in the CAN. Meanwhile, usually, in the CAN protocol, communication data is transmitted at two levels of a logic 0, that is, dominant or a logic 1, that is, recessive, and the priority of the logic 0 is higher than that of the logic 1. When two or more communication devices simultaneously transmit transmission signals, each communication device monitors whether the signal level of its own transmission and the signal level of the communication line, the so-called bus are equal or not, and performs transmission control, so-called arbitration. In the arbitration, the signal level of transmission that is being performed and the signal level of the bus are compared with each other, the transmission is continued if those are determined to be equal. On the other hand, if those are not determined to be equal, the transmission is stopped.

According to such a configuration, since the above-described arbitration is enabled at the point in time where a communication signal has been demodulated, i.e., the point in time where communication data has become obtainable, communication control by the CAN protocol can be processed in real time.

Accordingly, the communication capacity of communication data based on the CAN protocol can be increased, without increasing the communication line based on the CAN standard, that is, the CAN bus.

In accordance with one aspect, the receiving section is configured to determine a signal level corresponding to 1 bit of the control area network protocol based on a communication signal detected within a period of a signal length of 1 bit of the protocol.

In accordance with one aspect, the communication data is communication data based on a protocol of the control area network. A signal level of the communication data is determined to a signal level corresponding to 1 bit of the protocol based on a communication signal detected within a period of a signal length of 1 bit of the protocol.

According to such configurations, the signal level determined based on a communication signal by the receiving section is restored to communication data compatible with the CAN protocol. Accordingly, the restored communication data can be input as it is to a CAN controller that analyzes the CAN protocol. Therefore, even if a frequency-modulated communication signal is transmitted onto the bus, a communication device can cause the common CAN controller to perform a processing compatible with the CAN protocol. Accordingly, the availability of such communication devices is improved.

In accordance with one aspect, the signal level is determined to be dominant on condition that a communication signal exceeding a predetermined threshold has been detected within the period of the signal length of 1 bit, and determined to be recessive on condition that the determination to be dominant has not been made.

According to such a configuration, it becomes possible to determine, within a period on the order of 1 bit length, whether communication data is dominant, that is, has a logic 0 or is recessive, that is, has a logic 1. Therefore, for example, various processing concerning the CAN protocol by a CAN controller can be processed in real time.

### BRIEF DESCRIPTION OF THE DRAWINGS

Fig. 1 is a block diagram showing a configuration of a communication system including communication devices according to a first embodiment of the present disclosure;
Fig. 2 is a schematic view of a frequency multiplex communication that is performed by the communication system in Fig. 1;
Fig. 3 is a block diagram showing a configuration of a first communication device example in Fig. 1;
Fig. 4 is a block diagram showing a configuration of a second communication device example in Fig. 1;
Fig. 5 is a block diagram showing a configuration of a third communication device example in Fig. 1;
Fig. 6 is a block diagram showing a configuration of a fourth communication device example in Fig. 1;
Fig. 7 is a block diagram showing a configuration of a fifth communication device example in Fig. 1;
Fig. 8 is a block diagram showing a configuration of an ASK module of the communication device in Fig. 1;
Figs. 9 are graphs showing examples when the communication device in Fig. 1 has varied a carrier wave, where Fig. 9(a) is a graph showing a transmission wave of the first ECU, Fig. 9(b) is a graph showing a transmission wave of the third ECU, Fig. 9(c) is a graph showing a signal level of a bus to which the two transmission waves in Figs. 9(a) and 9(b) have been transmitted;
Figs. 10 are graphs showing examples when a carrier wave does not vary as comparative examples, where Fig. 10(a) is a graph showing a transmission wave of the first ECU, Fig. 10(b) is a graph showing a transmission wave of the third ECU, Fig. 10(c) is a graph showing a signal level of a bus to which the two transmission waves in Figs. 10(a) and 10(b) have been transmitted;
Fig. 11 is a block diagram showing a configuration of a communication system including communication devices according to a second embodiment of the present disclosure;
Fig. 12 is a block diagram showing a configuration of a communication system including communication devices according to a third embodiment of the present disclosure;
Fig. 13 is a schematic view showing a frequency multiplex communication that is performed by the communication system in Fig. 12;
Fig. 14 is a block diagram showing a first configuration example of the communication device in Fig. 12;
Fig. 15 is a block diagram showing a second configuration example of the communication device in Fig. 12;
Fig. 16 is a block diagram showing a third configuration example of the communication device in Fig. 12;
Fig. 17 is a block diagram showing a configuration of a communication system including communication devices according to a fourth embodiment of the present disclosure;
Fig. 18 is a block diagram showing an example of a communication system that can be replaced by the communication system in Fig. 17, as a comparative example;
Fig. 19 is a block diagram showing a configuration of a first communication device example in Fig. 17;
Fig. 20 is a block diagram showing a configuration of a second communication device example in Fig. 17;
Fig. 21 is a block diagram showing a configuration of a communication system including communication devices according to a fifth embodiment of the present disclosure;
Fig. 22 is a graph showing signal distortion on a bus of a common communication system, as a comparative example;
Fig. 23 is a block diagram showing an example of a configuration of the communication device in Fig. 21;
Fig. 24 is a block diagram showing a configuration of a first communication device example in Fig. 21;
Fig. 25 is a block diagram showing a configuration of a second communication device example in Fig. 21;
Fig. 26 is a block diagram showing a configuration example of a common communication system; and
Fig. 27 is a block diagram showing a configuration example of a common communication device.

### MODES FOR CARRYING OUT THE INVENTION

### First Embodiment

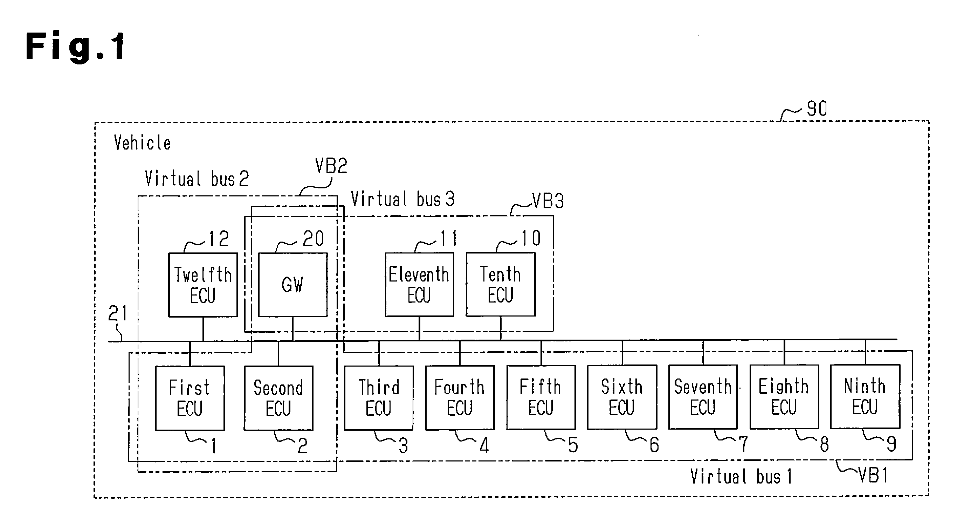

Figs. 1 to 9 illustrate a communication system including communication devices according to a first embodiment of to the present.

The communication system of the present embodiment is configured basically as a CAN (control area network) communication network. On the other hand, this communication system is a communication system that, in order to increase the communication capacity, uses CAN communication specifications while causing communications by so-called frequency division multiplexing, in which two or more communication signals based on the CAN protocol are transmitted to a communication bus 21 serving as a communication line respectively at the same time and in different frequency bands.

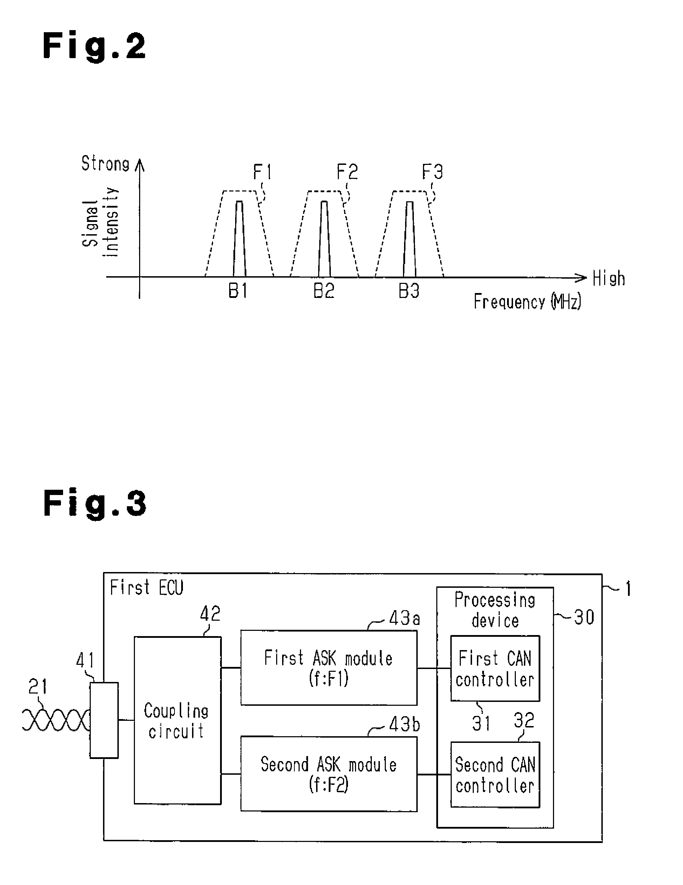

Figs. 1 and 2 illustrate an outline of the communication system of the present embodiment.

As shown in Fig. 1, a vehicle 90 includes a communication system as a network system for a vehicle. The communication system includes first to twelfth electronic control units (ECUs) 1 to 12 serving as communication devices, and a communication bus 21 to which the respective first to twelfth ECUs 1 to 12 are connected to be able to transmit and receive communication signals.

The communication bus 21 is a bus using a twisted pair cable having electrical characteristics compatible with CAN protocol transmission, and has characteristics also capable of transmitting a signal of a higher frequency band than the frequency band that is used exclusively by the CAN protocol. As shown in Fig. 2, to the communication bus 21, communication signals corresponding to first to third frequency bands F1 to F3 including as center frequencies first to third center frequencies B1 to B3 consisting of different frequencies and having predetermined frequency widths can be simultaneously transmitted.

To and from the first to twelfth ECUs 1 to 12, communication data based on the CAN protocol can be input and output. The first to ninth ECUs 1 to 9 modulate communication data based on the CAN protocol in the first frequency band F1 into a communication signal, and transmit the communication signal to the communication bus 21, while demodulating a communication signal of the first frequency band F1 received from the communication bus 21 to thereby receive an input of communication data. The first, second, and twelfth ECUs 1, 2, and 12 modulate communication data based on the CAN protocol in the second frequency band F2 into a communication signal, and transmit the communication signal to the communication bus 21, while demodulating a communication signal of the second frequency band F2 received from the communication bus 21 to thereby receive an input of communication data. The tenth and eleventh ECUs 10 and 11 modulate communication data based on the CAN protocol in the third frequency band F3 into a communication signal, and transmit the communication signal to the communication bus 21, while demodulating a communication signal of the third frequency band F3 received from the communication bus 21 to thereby receive an input of communication data. That is, in the communication system, a first virtual bus VB1 that makes the first to ninth ECUs 1 to 9 mutually communication capable, a second virtual bus VB2 that makes the first, second, and twelfth ECUs 1, 2, and 12 mutually communication capable, and a third virtual bus VB3 that makes the tenth and eleventh ECUs 10 and 11 mutually communication capable are constructed for each frequency band to be used for transmission and reception of communication data.

The communication system includes a gateway (GW) 20 that is connected to the communication bus 21, and retransmits a received communication signal after changing its electrical characteristics, specifically, the frequency band of reception to another frequency band. To and from the GW 20, communication data based on the CAN protocol can be input and output. The GW 20 is capable of transmitting and receiving a communication signal with respect to any of the first to third frequency bands F1 to F3, and demodulates a communication signal received in any of the frequency bands to thereby receive an input of communication data, and modulates the input communication data into other frequency bands for transmission as communication signals to the communication bus 21. That is, the GW 20 performs conversion of the frequency band of communication signals transmitted through the first to third virtual buses VB1 to VB3, and transfers the communication signals to virtual buses of other frequency bands. The GW 20, for example, transmits a communication signal received from the first frequency band F1 after converting it to communication signals of the second and third frequency bands F2 and F3, and transmits a communication signal received from the third frequency band F3 after converting it to communication signals of the first and second frequency bands F1 and F2. Accordingly, a transmission signal can be transmitted also between the ECUs that belong to different virtual buses.

The communication system accordingly enables mutual communication (transmission and reception) of various information to be used for control among the first to twelfth ECUs 1 to 12 via the communication bus 21.

The communication system thus configured has the same function as that of the communication system in Fig. 26 of the present application described in the foregoing. That is, for the communication system in Fig. 26 described in the foregoing, the first to ninth ECUs 101 to 109 are connected to the first CAN bus 121, the first, second, and twelfth ECUs 101, 102, and 112 are connected to the second CAN bus 122, and the tenth and eleventh ECUs 110 and 111 are connected to the third CAN bus 123. The GW 120 is a system that transfers communication data of a CAN bus to another CAN bus. On the other hand, for the communication system of the present embodiment, a first virtual bus VB1 corresponding to the first CAN bus 121 of a common communication system, a second virtual bus VB2 corresponding to the second CAN bus 122, a third virtual bus VB3 corresponding to the third CAN bus 123, and a GW 20 corresponding to the GW 120 are provided. That is, the three CAN buses 121 to 123 required for the common communication system are reduced to only the one communication bus 21 in the present embodiment.

Figs. 3 to 10 illustrate details of the communication system of the present embodiment.

The first to twelfth ECUs 1 to 12 are respectively control units to be used for various control of the vehicle 90, and are, for example, ECUs whose control objects include a drive system, a travel system, a vehicle body system, and an information equipment system. For example, as an ECU whose control object is a drive system, an engine ECU can be mentioned, as ECUs whose control object is the travel system, a steering ECU and a brake ECU can be mentioned, as ECUs that control the vehicle body system, a light ECU and a window ECU can be mentioned, and as ECUs whose control object is the information equipment system, a car navigation ECU can be mentioned.

The first and second ECUs 1 and 2 have the same configuration as each other, the third to ninth ECUs 3 to 9 have the same configuration as each other, and the tenth and eleventh ECUs 10 and 11 have the same configuration as each other. Therefore, the configurations of one ECU each, that is, the first ECU 1, the third ECU 3, and the tenth ECU 10, will be respectively described for the pluralities of ECUs having the same configurations, and regarding the configurations of other ECUs, that is, the second ECU 2, the fourth to ninth ECUs 4 to 9, and the eleventh ECU 11, detailed descriptions thereof will be omitted. Also regarding the description of the configurations of the first ECU 1, the third ECU 3, the tenth ECU 10, and the twelfth ECU 12, the same structural elements will be denoted by the same reference signs, and detailed descriptions thereof will be omitted.

As shown in Figs. 3 to 6, for each of the first, third, tenth, and twelfth ECUs 1, 3, 10, and 12, a processing device 30 that performs processing required for various control and one or more CAN controllers (31, 32) that can transmit and receive communication data based on the CAN protocol are provided. The processing device 30 is constructed including a microcomputer, and has an arithmetic device that performs various processing and a storage device that retains an operation result, programs to provide various control functions, and the like. In the processing device 30, a predetermined control function is provided by a program to provide a predetermined control function being executed by the arithmetic device.

As shown in Fig. 3, since the first ECU 1 includes first and second CAN controllers 31 and 32 in the processing device 30, the first ECU 1 can respectively transmit and receive communication data based on the CAN protocol via each of the first and second CAN controllers 31 and 32. The first ECU 1 includes a first ASK module 43a that is connected to the first CAN controller 31, a second ASK module 43b that is connected to the second CAN controller 32, and a coupling circuit 42 that is connected to the first and second ASK modules 43a and 43b and connected to the communication bus 21 via a connector 41. The ASK means amplitude shift keying.

The first and second CAN controllers 31 and 32 analyze input communication data based on the CAN protocol, provide information such as control information included in the communication data for the processing device 30, and output information such as control information received from the processing device 30 after converting it to communication data based on the CAN protocol.

The first ASK module 43a transmits a communication signal into which communication data input from the first CAN controller 31 has been modulated based on the first frequency band F1 (f: F1) serving as a predetermined transmission frequency band, and inputs the signal to the coupling circuit 42. The first ASK module 43a receives a communication signal output from the coupling circuit 42 and demodulates the communication signal based on the first frequency band F1 serving as a predetermined reception frequency band to thereby output the signal to the first CAN controller 31. The same first frequency band F1 is thus set for the transmission frequency band and the reception frequency band, so that the first ASK module 43a can receive a self-transmitted signal.

The second ASK module 43b transmits a communication signal into which communication data input from the second CAN controller 32 has been modulated based on the second frequency band F1 (f: F2) as a predetermined transmission frequency band, and inputs the signal to the coupling circuit 42. The second ASK module 43b receives a communication signal output from the coupling circuit 42 and demodulates the communication signal based on the second frequency band F2 serving as a predetermined reception frequency band to thereby output the signal to the second CAN controller 32. The same second frequency band F2 is thus set for the transmission frequency band and the reception frequency band, so that the second ASK module 43b can receive a self-transmitted signal.

The coupling circuit 42 is a circuit for matching electrical characteristics of a communication signal to be input and output with respect to the communication bus 21 connected to the connector 41 and electrical characteristics of a communication signal to be input and output with respect to the first and second ASK modules 43a and 43b. The coupling circuit 42, for example, outputs to the first or second ASK module 42a, 43b a communication signal containing a direct current component and an alternating current component input from the communication bus 21 after converting it to a communication signal containing only an alternating component.

That is, the first ECU 1 can use the first and second frequency bands F1 and F2 for transmission and reception of communication data.

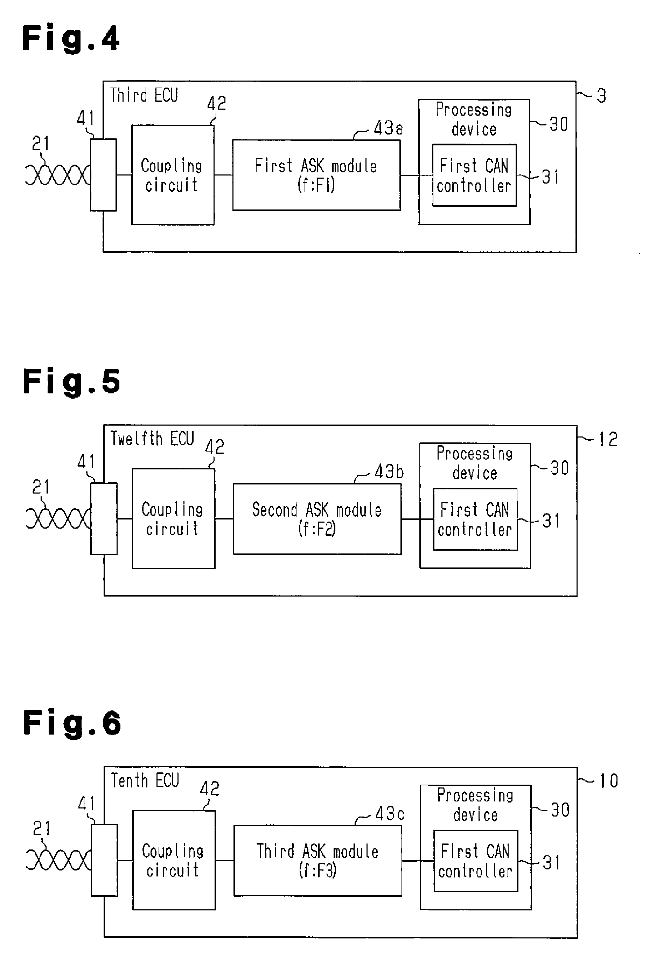

As shown in Fig. 4, since the third ECU 3 includes the first CAN controller 31 in the processing device 30, the third ECU 3 can transmit and receive communication data based on the CAN protocol via the first CAN controller 31. The third ECU 3 includes a first ASK module 43a that is connected to the first CAN controller 31 and a coupling circuit 42 that is connected to the first ASK module 43a and connected to the communication bus 21 via a connector 41. That is, the third ECU 3 can use the first frequency band F1 for transmission and reception of communication data.

As shown in Fig. 5, the twelfth ECU 12 is the same in configuration as the third ECU 3 except that the first ASK module 43a of the third ECU 3 is changed to the second ASK module 43b. That is, the twelfth ECU 12 can use the second frequency band F2 for transmission and reception of communication data.

As shown in Fig. 6, the tenth ECU 10 is the same in configuration as the third ECU 3 except that the first ASK module 43a of the third ECU 3 is changed to a third ASK module 43c. As compared to the configuration of the first ASK module 43a, the third ASK module 43c is the same in configuration as the first ASK module 43a except for the difference in that the third frequency band F3 (f: F3) is set respectively for a predetermined transmission frequency band and a predetermined reception frequency band. That is, the tenth ECU 10 can use the third frequency band F3 for transmission and reception of communication data.

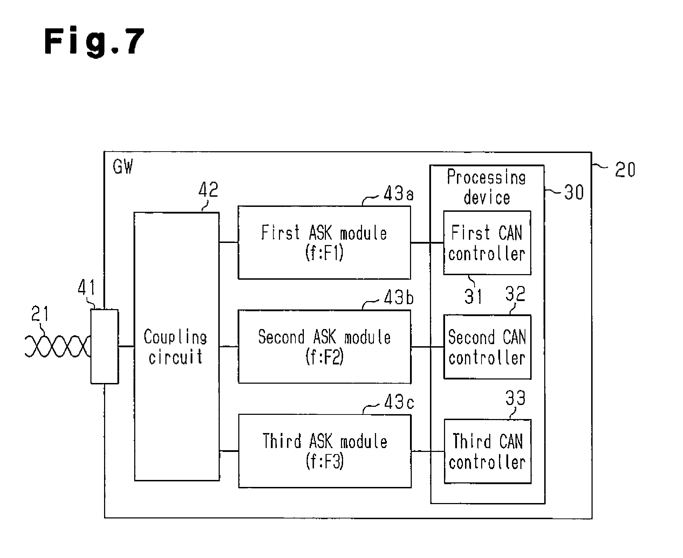

As shown in Fig. 7, as compared to the configuration of the first ECU 1, the GW 20 is different in that a third ASK module 43c is added in parallel with the first and second ASK modules 43a and 43b and that a third CAN controller 33 corresponding to the third ASK module 43c is added to the processing device 30, but is the same in other aspects of the configuration. That is, the GW 20 can use communication signals of the first to third frequency bands F1 to F3 for transmission and reception of communication data. The processing device 30 of the GW 20 stores a transfer processing program to transfer information such as control information, and the processing device 30 performs a transfer processing of information such as control information based on execution of the transfer processing program. That is, the processing device 30 outputs information obtained through any of the first to third CAN controllers 31 to 33 from a CAN controller through which the information has not been obtained.

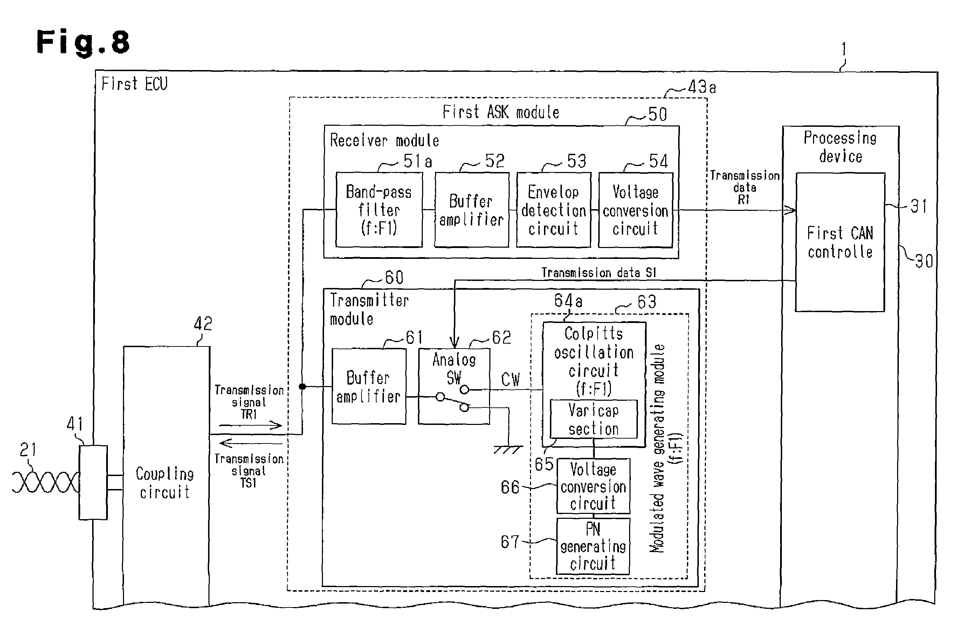

Figs. 8 to 10 illustrate details of the first ASK module 43a. The second and third ASK modules 43b and 43c are different in that the predetermined transmission frequency band and the predetermined reception frequency band that are set to the first frequency band F1 in the first ASK module 43a are respectively set to the first frequency band F2 or the third frequency band F3, but are the same in other aspects of the configuration. Therefore, in the following, description will be given of the configuration of the first ASK module 43a, and description of the second and third ASK modules 43b and 43c will be omitted.

As shown in Fig. 8, for the first ASK module 43a, a receiver module 50 serving as a receiving section and a transmitter module 60 serving as a transmitting section are provided.

The transmitter module 60 inputs communication data S1 based on the CAN protocol from the first CAN controller 31, and outputs a communication signal TS1 into which the input communication data S1 has been amplitude-modulated to the coupling circuit 42.

For the transmitter module 60, a modulated wave generating module 63, an analog switch (SW) 62, and a buffer amplifier 61 are provided.

The modulated wave generating module 63 is a module that generates a carrier wave to cause amplitude modulation of the communication data S1. The modulated wave generating module 63 is a so-called voltage controlled oscillator (VCO), and generates a carrier wave CW consisting of a frequency that varies randomly in a range included within the first frequency band F1 with the center frequency B1 used as a center frequency. That is, the carrier wave CW consists of a frequency that slightly varies randomly around the center frequency B1 and the variation range of which is within the first frequency band F1. The modulated wave generating module 63 includes a Colpitts oscillation circuit 64a, a voltage conversion circuit 66, and a pseudorandom noise (Pseudorandom Noise: PN) code generating circuit 67.

The pseudorandom noise code generating circuit 67 is a circuit that, for example, as commonly known, generates a random bit string based on a signal obtained by repeating a previously determined random bit string, which is a pseudo noise code represented by a binary, a so-called pseudo-noise code. The noise code to be generated by the pseudorandom noise code generating circuit 67 is set not to be coincident with that of another ECU.

The voltage conversion circuit 66 is a circuit that converts a noise code generated by the pseudorandom noise code generating circuit 67 into an electric signal that can be input to the Colpitts oscillation circuit 64a.

The Colpitts oscillation circuit 64a is a publicly-known oscillation circuit that generates a carrier wave corresponding to a transmission frequency band, and the frequency of oscillation of which is provided by one coil and two capacitors. The Colpitts oscillation circuit 64a includes a varicap section 65, which varies the capacitance of the two capacitors described above based on a voltage that varies in response to a noise code input from the voltage conversion circuit 66. That is, the Colpitts oscillation circuit 64a generates a carrier wave consisting of a frequency that varies randomly within the first frequency band F1 with the center frequency B1 used as a center frequency based on a noise code generated by the pseudorandom noise code generating circuit 67.

The analog switch 62 is a switch that outputs a communication signal TS1 into which communication data S1 has been amplitude-modulated. The analog switch 62 is connected with the first CAN controller 31 that inputs the communication data S1, the modulated wave generating module 63 that inputs a carrier wave, and a ground. The analog switch 62 is connected with the buffer amplifier 61 as an output destination to which the communication signal TS1 into which that communication data S1 has been amplitude-modulated is output. The analog switch 62 includes an internal switch which switches an output between the carrier wave and ground. That is, the analog switch 62 switches a connection destination to output between the carrier wave and ground by switching of the internal switch according to a signal level of the communication data S1, to thereby generate and output a communication signal consisting of carrier waves with an amplitude according to a logic 0 or 1 of the communication data S1, and inputs the signal to the buffer amplifier 61. Specifically, the analog switch 62 connects the output to the carrier wave on condition that the communication data S1 is with a logic 0 (dominant) to thereby output a communication signal (transmission wave) corresponding to the logic 0 of the communication data S1. On the other hand, the analog switch 62 connects the output to the ground on condition that the communication data S1 is with a logic 1 (recessive) to thereby output a communication signal (transmission wave) corresponding to the logic 1 of the communication data S1. That is, in the present embodiment, the carrier wave is provided as a communication signal into which the logic 0 has been amplitude-modulated, and the ground level is provided as a communication signal into which the logic 1 has amplitude-modulated based on that the amplitude of the communication data S1 consists only of binary values of 0 and 1. Accordingly, the communication signal TS1 corresponding to the communication data S1 is output as a signal modulated in the first frequency band F1 serving as a transmission frequency band.

The buffer amplifier 61 outputs a signal level and the like input from the analog switch 62 after adjusting it to a communication signal TS1 having electrical characteristics that enable transmission to the communication bus 21.

Accordingly, the communication data S1 based on the CAN protocol is output from the first ECU 1 to the coupling circuit 42 as a communication signal TS1 amplitude-modulated by a carrier wave of the first frequency band F1.

The receiver module 50 receives an amplitude-modulated communication signal TR1 via the coupling circuit 42 and demodulates the received communication signal TR1 to thereby output obtained communication data R1 based on the CAN protocol to the first CAN controller 31. The receiver module 50 includes a band-pass filter 51 a into which a communication signal TR1 is input, a buffer amplifier 52 to which a communication signal passed through the band-pass filter 51 a is input, an envelope detection circuit 53 to which a communication signal is input from the buffer amplifier 52, and a voltage conversion circuit 54 to which communication data detected by the envelope detection circuit 53 is input.

The band-pass filter 51 a is a circuit that allows passage of only the first frequency band F1 out of the frequency bands included in the input communication signal TR1, a so-called band-pass filter, and may be, for example, a LC band-pass filter constructed including coils and capacitors. The band-pass filter 51 a is constructed to pass a signal in a frequency range included within the first frequency band F1 using the center frequency B1 as a center frequency. Since the band-pass filter 51 a is a publicly-known band-pass filter and suffices with a band-pass filter that allows passage of only a necessary frequency band, commonly-known various band-pass filters, for example, one constructed by passive elements and one constructed including active elements can be adopted.

The buffer amplifier 52 converts a communication signal passed through the band-pass filter 51 a to a signal level suitable for the envelope detection circuit 53 demodulating the same, for example, modulates the signal. Accordingly, the communication signal passed through the band-pass filter 51 a can be made to a signal suitable for being demodulated by the envelope detection circuit 53.

The envelope detection circuit 53 is a circuit that demodulates a signal from an amplitude-modulated carrier wave. The envelope detection circuit 53 demodulates a communication signal into which CAN protocol communication data with an amplitude of a logic 0 and a logic 1 has been amplitude-modulated into CAN protocol communication data consisting of a logic 0 and a logic 1. Accordingly, communication data compatible with the CAN protocol is obtained from the communication signal amplitude-modulated by a carrier wave of the first frequency band F1. In some cases, as a result of communication signals transmitted by two or more ECUs being superimposed in the first frequency band F1 and mutually interfering, the length of a demodulated signal indicating a logic 0 becomes shorter than the period of 1 bit in the CAN protocol. Therefore, the envelope detection circuit 53 may, when a logic 0 is included in the communication signal, extend the detection result of a logic 0 to at least a length (time) in which the first CAN controller 31 can detect the logic 0.

The voltage conversion circuit 54 is a circuit that converts communication data demodulated by the envelope detection circuit 53 to communication data R1 of a voltage level at which the data can be input to the first CAN controller 31. Accordingly, communication data demodulated by the envelope detection circuit 53 can be input to the first CAN controller 31. As described above, the envelope detection circuit 53 sometimes outputs a logic having a length shorter than the length of 1 bit in the CAN protocol as communication data. In this case, the voltage conversion circuit 54 may extend the length of a logic 0 in the communication data R1 to at least a length in which the first CAN controller 31 can detect the logic 0.

The first CAN controller 31 may be adjusted to be able to detect a logic 0 shorter than the period of 1 bit in the CAN protocol.

Accordingly, from the communication signal TR1 including signals of the first to third frequency bands F1 to F3, only a communication signal of the first frequency band F1 being a predetermined reception frequency band is selected, and thus demodulated as communication data R1 in a state in which the first CAN controller 31 can detect the same in terms of the CAN protocol.

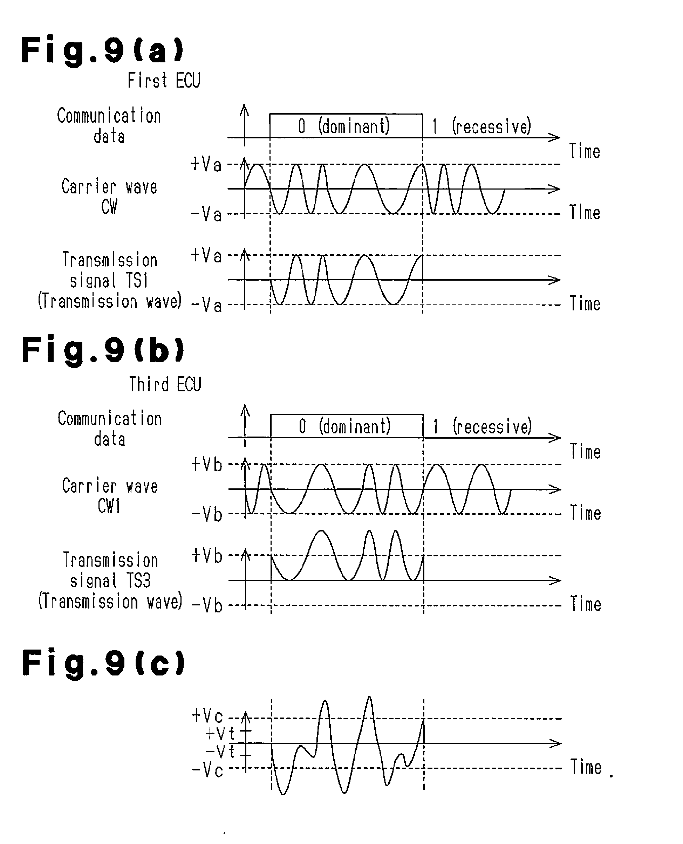

Fig. 9 illustrates that arbitration in the CAN protocol can be processed in real time. Fig. 9 shows a case where the first ECU 1 and the third ECU 3 have simultaneously output respective communication signals TS1 and TS3 to the first frequency band F1. As a result of the frequency of the carrier waves of the first ECU 1 and the third ECU 3 varying randomly, the phase of those carrier waves also varies randomly.

As shown in Fig. 9(a), the first ECU 1 amplitude-modulates communication data that changes from logic 1 to logic 0 to logic 1 by means of a carrier wave CW. The carrier wave CW has a frequency that varies randomly and dynamically in a time corresponding to the bit length of 1 bit of the CAN protocol, and has an amplitude of ±Va[V]. Due to this modulation, a communication signal TS1 (transmission wave) generated without the carrier wave CW superimposed when the communication data is a logic 1 and with the carrier wave superimposed when the communication data is a logic 0 is output to the communication bus 21 from the first ECU 1.

As shown in Fig. 9(b), the third ECU 3 amplitude-modulates communication data that changes with time from logic 1 to logic 0 to logic 1 at the same timing as that of the communication data of the first ECU 1 by means of a carrier wave CW1. The carrier wave CW1 has a frequency that varies randomly and dynamically in a time corresponding to the bit length of 1 bit of the CAN protocol, and has an amplitude of ±Vb[V]. Due to this modulation, a communication signal TS3 (transmission wave) generated without the carrier wave superimposed when the communication data is a logic 1 and with the carrier wave CW1 superimposed when the communication data is a logic 0 is output to the communication bus 21 from the third ECU 3.

That is, the communication bus 21 is superimposed with the communication signal TS1 output from the first ECU 1 and the communication signal TS3 output from the third ECU 3. Meanwhile, the frequency of a carrier wave of the communication signal TS1 and the frequency of a carrier wave of the communication signal TS3 vary randomly and dynamically with no relation to each other. Therefore, when the communication data is a logic 0, the amplitudes of the communication signal TS1 and the communication signal TS3 superimposed on the communication bus 21 cancel each other out to result in a size with which 0 cannot be detected in some cases, and in some other cases, conversely increase in synergy with each other. That is, as shown in Fig. 9(c), as the amplitude of the communication signal on the communication bus 21, an amplitude greater than a threshold ±Vt to determine that the communication data is a logic 0 is included. Accordingly, when the communication signal TS1, TS3 corresponding to a logic 0 is output from the first or third ECU 1, 3, by monitoring the communication signal on the communication bus 21, the first or third ECU 1, 3 can detect that communication data of a logic 0 is being output to the communication bus 21. Accordingly, as a result of the logic 0 being detected in the period of 1 bit of the CAN protocol, for example, in the period of a logic 0 in the figure, the CAN controller can determine that the 1 bit is a logic 0. On the other hand, the CAN controller can determine the 1 bit to be a logic 1 when not being able to determine being a logic 0 in the 1-bit period. Usually, since a logic 0 is considered to be detected two or more times in the 1-bit period, it may be determined that the 1 bit is a logic 1 with a period of half the 1-bit period or a 1/3 period thereof left.

In the communication bus 21, even if there is an ECU(s) that is outputting a logic 1, when at least one ECU is outputting a logic 1, the signal level of the communication bus 21 is superimposed with a logic 0 signal, so that the logic 0 is correctly detected. That is, in the communication bus 21, the order of priority of the logic 0 is higher than the order of priority of the logic 1.

Meanwhile, when two or more ECUs simultaneously transmit logics 0, since the amplitude of a communication signal indicating a logic 0 to be detected from the communication bus 21 fluctuates according to the mode of superimposition of the carrier waves that vary randomly, as described above, the period where 0 can be detected may become a period considerably shorter than the length of 1 bit length of the CAN protocol. Therefore, in the case of performing arbitration, data indicating a logic 0 detected in a period shorter than the 1-bit length is converted into a signal of a length in which the first CAN controller 31 can detect it. This allows even a common CAN controller to perform arbitration based on the CAN protocol in real time for communication signals transmitted by frequency multiplex communication.

For allowing even a common CAN controller to perform arbitration satisfactorily, a logic 0 signal that is detected in only a short period may be input to the CAN controller as communication data for a certain length of period. For example, after detection of a logic 0, the logic 0 may be output until a 1-bit length in which it was detected ends, or a logic 0 may be output for only a predetermined period in which the CAN controller can detect it. Alternatively, the time required for the CAN controller detecting a logic 0 may be reduced.

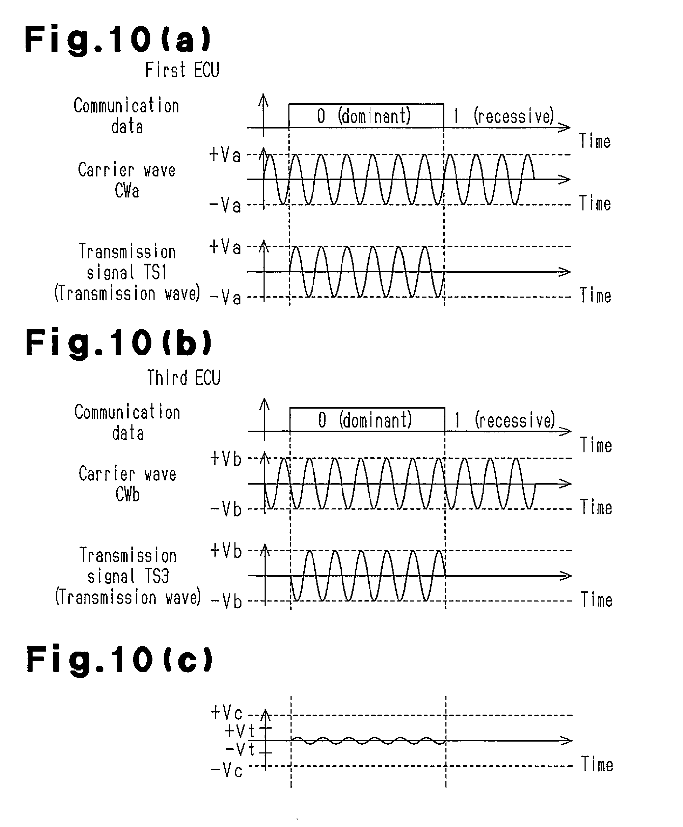

Fig. 10 illustrates cases where the frequency of a carrier wave does not vary as comparative examples. Fig. 10 schematically shows a case where a carrier wave CWa of the first ECU 1 and a carrier wave CWb of the third ECU 3 maintain a phase difference of 180°.

As shown in Fig. 10(a), the first ECU 1 amplitude-modulates communication data that changes with time from logic 1 to logic 0 to logic 1 by means of a carrier wave CWa having an amplitude of ±Va[V]. Due to this modulation, a communication signal TS1 (transmission wave) generated without the carrier wave CWa superimposed when the communication data is a logic 1 and with the carrier wave CWa superimposed when the communication data is a logic 0 is output to the communication bus 21 from the first ECU 1.

As shown in Fig. 10(b), the third ECU 3 amplitude-modulates communication data that changes with time from logic 1 to logic 0 to logic 1 by means of a carrier wave CWb having an amplitude of ±Va[V]. Due to this modulation, a communication signal TS3 (transmission wave) generated without the carrier wave CWb superimposed when the communication data is a logic 1 and with the carrier wave CWb superimposed when the communication data is a logic 0 is output to the communication bus 21 from the third ECU 3.

The carrier wave of the third ECU 3 has a phase difference of 180° with respect to the carrier wave of the first ECU 1. That is, in the communication bus 21, since the phase difference of the carrier waves between the communication signal TS1 and the communication signal TS3 is 180°, the amplitudes (carrier waves) of the communication signal TS1 and the communication signal TS3 output to the communication bus 21 in response to a logic 0 mutually interfere to cancel each other's amplitude out. That is, as shown in Fig. 10(c), the amplitude of the communication signal in the period corresponding to a logic 0 results in an amplitude smaller than a threshold ±Vt to determine being a logic 0. A possibility can thus be considered that, when the communication signals TS1 and TS3 corresponding to a logic 0 are output from the first and third ECUs 1 and 3, the first or third ECU 1, 3 cannot detect that communication data of a logic 0 is being output to the communication bus 21 even by monitoring the communication signal on the communication bus 21, but the present embodiment solves this problem.

As described above, according to the communication device and communication system of the present embodiment, the following advantages are obtained.
(1) A communication signal is modulated by a frequency that fluctuates in a predetermined frequency band (F1, F2, F3). Accordingly, even if two or more ECUs transmit communication signals of the same transmission frequency band (frequency band for transmission) to the communication bus 21, interference of the communication signals is suppressed. For example, the possibility that communication signals (TS1 and TS3) inverted in phase overlap each other to reach a level at which the communication signal is not detected is suppressed. Specifically, when two ECUs (1 and 3) that are shifted by 180° in the phase of signals for modulation, that is, so-called carrier waves CW simply simultaneously output communication signals (TS1 and TS3) after modulation of the logic 0, it may occur in the communication bus 21 that the two communication signals (TS1 and TS3) differing 180° in phase are overlapped with each other and the communication signals are cancelled out. That is, there is a possibility that although the two ECUs (1 and 3) are both outputting a logic 0, a logic 1 is to be detected from the communication signal of the communication bus 21. However, the present embodiment prevents the carrier waves CW of the two ECUs (1 and 3) from continuously overlapping with a phase of 180° by dynamically varying the frequency to be used for modulation in a range included within the transmission frequency band, for example, the first frequency band F1. Accordingly, for example, when a logic 0 is being output, even for a short time, a communication signal that allows detecting that a logic 0 is being output is transmitted to the communication bus 21.

By dynamically varying the modulating frequency (carrier wave CW), an ECU that is transmitting a communication signal from the transmitter module 60 monitors the communication signal via the receiver module 50. This allows detecting that another communication signal is superimposed on the communication bus 21. That is, the ECU can control transmission of a communication signal from its own transmitter module 60 by monitoring the existence of another communication signal.

Further, by changing the predetermined frequency band (F1, F2, F3), frequency multiplex communication can be performed in the communication bus 21.

According to the communication device of the present embodiment, the communication capacity of communication data based on the CAN protocol can be increased, without increasing the number of communication buses 21.
(2) The frequency of the carrier wave CW varies dynamically and randomly for each ECU. Therefore, between two or more ECUs, a phase difference of the respective frequencies sequentially varies. Accordingly, even if two or more ECUs simultaneously transmit transmission signals, each ECU in transmission operation can detect that another communication signal is being transmitted.
(3) An ECU to which a control area network, so-called CAN, is applied allows increasing the communication traffic volume of communication data based on the CAN protocol, without increasing the number of communication buses 21 in the CAN. Meanwhile, usually, in the CAN protocol, communication data is transmitted at two levels of a logic 0 i.e., dominant and a logic 1 i.e., recessive, and the priority of the logic 0 is higher than that of the logic 1. When two or more ECUs simultaneously transmit transmission signals, each ECU monitors whether the signal level of its own transmission and the signal level of the communication bus 21 are equal or not, and performs transmission control, so-called arbitration. In the arbitration, the signal level of transmission that is being performed and the signal level of the communication bus 21 are compared with each other, the transmission is continued if those are determined to be equal, and the transmission is stopped if those are not determined to be equal.

Since the above-described arbitration is enabled at the point in time where a communication signal TR1 has been demodulated, i.e., the point in time where communication data R1 has become obtainable, communication control by the CAN protocol can be processed in real time.

Accordingly, the communication capacity of communication data based on the CAN protocol can be increased, without increasing the number of the CAN buses, that is, the communication buses 21 in the CAN.
(4) The signal level determined based on a communication signal in the receiver module 50 is restored to communication data compatible with the CAN protocol. Accordingly, the restored communication data can be input as it is to a CAN controller (such as 31) that analyzes the CAN protocol. Therefore, even if a frequency-modulated communication signal is transmitted onto the communication bus 21, an ECU can cause the common CAN controller (such as 31) to perform a processing compatible with the CAN protocol. Accordingly, the availability of such ECUs is improved.
(5) It becomes possible to determine dominant i.e., a logic 0 or recessive i.e., a logic 1 for communication data within a period on the order of 1 bit length. Therefore, for example, various processing concerning the CAN protocol by a CAN controller (such as 31) can be processed in real time.

### Second Embodiment

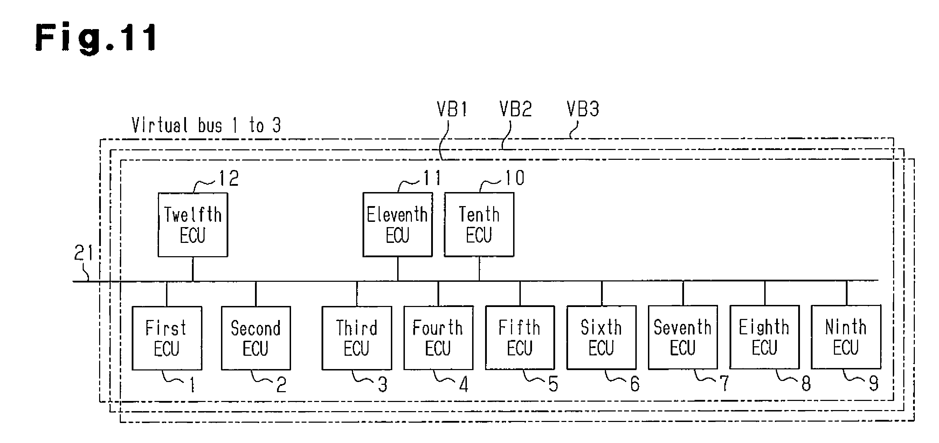

Fig. 11 illustrates a communication system including communication devices according to a second embodiment of the present disclosure.

As compared to the communication system of the first embodiment, the communication system of the present embodiment is different in that all of the first to twelfth ECUs 1 to 12 are constructed to be communication capable in the first to third frequency bands F1 to F3, while no GW is provided, and is the same in other aspects of the configuration, and therefore, the same structural elements will be denoted by the same reference signs, and detailed descriptions thereof will be omitted.

The configuration of the first to twelfth ECUs 1 to 12 is the same as that of the GW 20 of the first embodiment. The processing devices 30 of the first to twelfth ECUs 1 to 12 does not include the transfer processing program provided for the processing device 30 of the GW 20 of the first embodiment, but includes a program that provides a predetermined control function. The first to twelfth ECUs 1 to 12 can thus use the frequency bands F1 to F3 for communication, and therefore reach a mode in which each is included in a virtual bus VB1 constructed by the first frequency band F1, a virtual bus VB2 constructed by the second frequency band F2, and a virtual bus VB3 constructed by the third frequency band F3. Accordingly, the first to twelfth ECUs 1 to 12 can mutually transmit and receive information using the frequency bands F1 to F3.

As described above, according to the communication device and communication system of the present embodiment, the following advantage is obtained in addition to the advantages described in (1) to (5) of the first embodiment described above.

Since all the ECUs can mutually transmit and receive information using the frequency bands F1 to F3, the communication system can be simply configured.

### Third Embodiment

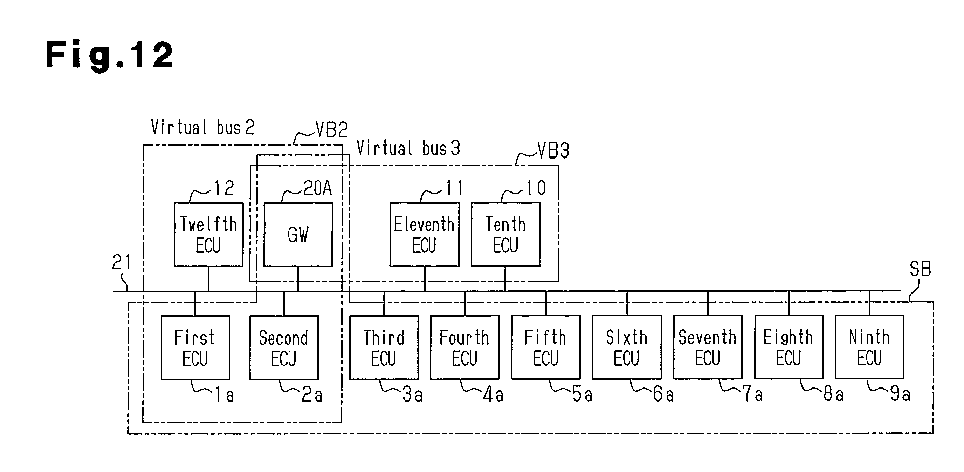

Figs. 12 to 16 illustrate a communication system including communication devices according to a third embodiment of the present disclosure.

The communication system of the present embodiment has a difference from the communication system of the first embodiment in using a standard frequency band F10 based on a signal change of the CAN protocol in place of the first frequency band F1 of the first embodiment, and is the same in other aspects of the configuration, and therefore, the same structural elements will be denoted by the same reference signs, and detailed descriptions thereof will be omitted.

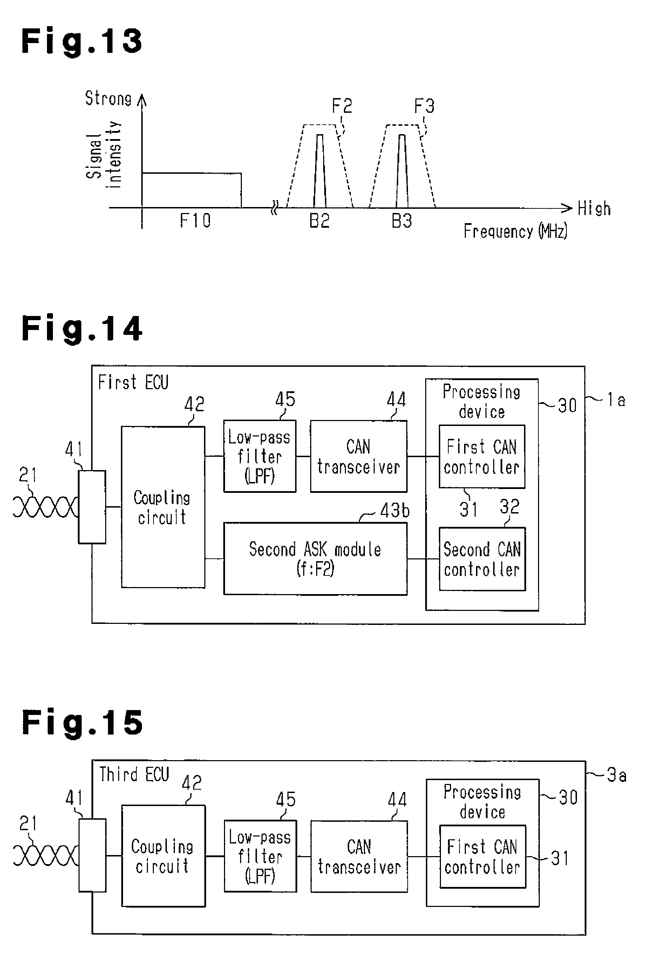

Figs. 12 and 13 illustrate an outline of the communication system.

As shown in Fig. 12, the communication bus 21 of the communication system is connected with first to ninth ECUs 1 a to 9a, tenth to twelfth ECUs 10 to 12, and a GW 20A to be capable of transmission and reception of a communication signal based on the CAN protocol. The first to ninth ECUs 1 a to 9a perform mutual communication by a standard frequency band F10 which is a frequency corresponding to a standard CAN protocol communication signal, that is, a signal that varies at the maximum of 500 kbps. The first, second, and twelfth ECUs 1 a, 2a, and 12 perform mutual communication based on the second frequency band F2, and the tenth and eleventh ECUs 10 and 11 perform mutual communication based on the third frequency band F3. In the communication system, a standard bus SB that makes the first to ninth ECUs 1 a to 9a mutually communication capable, a second virtual bus VB2 that makes the first, second, and twelfth ECUs 1, 2, and 12 mutually communication capable, and a third virtual bus VB3 that makes the tenth and eleventh ECUs 10 and 11 mutually communication capable are thus constructed for each frequency band to be used for transmission and reception of communication data. The GW 20A processes transfer of communication signals between the standard bus SB and each of the second and third virtual buses VB2 and VB3 and between the second and third virtual buses VB2 and VB3.

Figs. 14 to 16 illustrate details of the communication system. Since the first and second ECUs 1 a and 2a are the same in configuration, description of the first ECU 1 a will be given in the following, and description of the second ECU 2a will be omitted. Since the third to ninth ECUs 3a to 9a are all the same in configuration, description of the third ECU 3a will be given in the following, and description of the fourth to the ninth ECUs 4a to 9a will be omitted.

As shown in Fig. 14, the first ECU 1 a can transmit and receive communication data based on the CAN protocol via each of the first and second CAN controllers 31 and 32 included in the processing device 30. The first ECU 1 a includes a CAN transceiver 44 that is connected to the first CAN controller 31, a low-pass filter 45 (LPF) that is connected to the CAN transceiver 44, and a second ASK module 43b that is connected to the second CAN controller 32. The first ECU 1 a includes a coupling circuit 42 that is connected to the low-pass filter 45 and the second ASK module 43b, and connected to the communication bus 21 via a connector 41.

The CAN transceiver 44 is a publicly-known CAN transceiver, and outputs a communication signal received from the communication bus 21 after converting it to communication data that can be input to the first CAN controller 31, and transmits communication data output from the first CAN controller 31 after converting it to a communication signal that can be transmitted to the communication bus 21.

The low-pass filter 45 selects, from a communication signal input via the coupling circuit 42, only the standard frequency band F10 to be used for a CAN protocol signal, that is, removes a signal of frequency bands higher than the standard frequency band F10, for example, the second and third frequency bands F2 and F3. The low-pass filter 45 accordingly selects from a received communication signal a signal of the standard frequency band F10 not higher than a frequency band corresponding to a signal change of, for example, 500 kbps, which corresponds to a signal frequency to be used for a CAN protocol communication, and transmits the signal to the CAN transceiver 44. A signal based on the CAN protocol that is output from the CAN transceiver 44 is in a frequency region not higher than the frequency band corresponding to, for example, 500 kbps, and is therefore transmitted to the communication bus 21 without being removed by the low-pass filter 45.

The second ASK module 43b makes the first ECU 1 a capable of transmitting and receiving a communication signal by the second frequency band F2.

Accordingly, the first ECU 1 a can use the standard frequency band F10 and the second frequency band F2 for transmission and reception of communication data.

As shown in Fig. 15, the third ECU 3a includes a first CAN controller 31 in the processing device 30, and therefore can transmit and receive communication data based on the CAN protocol via the first CAN controller 31. The third ECU 3a includes a CAN transceiver 44 that is connected to the first CAN controller 31, a low-pass filter 45 that is connected to the CAN transceiver 44, and a coupling circuit 42 that is connected to the low-pass filter 45, and connected to the communication bus 21 via a connector 41. That is, the third ECU 3 can use the standard frequency band F10 to be used for a CAN protocol communication for transmission and reception of communication data.

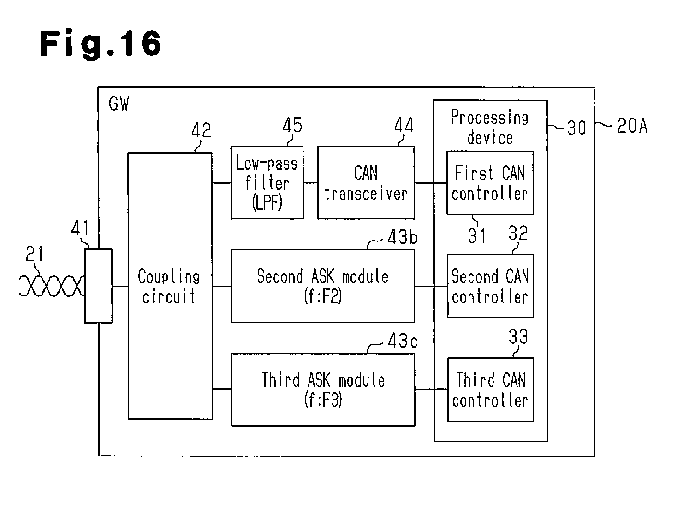

As shown in Fig. 16, as compared with the first ECU 1 a, the GW 20A is different in that a third ASK module 43c is added to be in parallel with the second ASK module 43b and that a third CAN controller 33 corresponding to the third ASK module 43c is added to the processing device 30, but is the same in other aspects of the configuration. That is, the GW 20A can use the standard frequency band F10, the frequency band F2, and the frequency band F3 for transmission and reception of communication data.

Similar to the GW 20 of the first embodiment, the processing device 30 of the GW 20 stores a transfer processing program to perform a transfer processing of communication information, and the processing device 30 performs a transfer processing of communication information based on execution of the transfer processing program. That is, the processing device 30 sets a communication content received through any of the first to third CAN controllers 31 to 33 in a CAN controller through which the communication content has not been obtained to cause transmission.

As described above, according to the communication device and communication system of the present embodiment, the following advantage is obtained in addition to the advantages described in (1) to (5) of the first embodiment described above.
(7) The communication bus 21 can be superimposed with an ordinary CAN protocol communication signal and communication signals based on the frequency band F2 and the frequency band F3. Therefore, the communication system can be constructed including an existing CAN system, so that the communication system is improved in applicability and the like.

### Fourth Embodiment

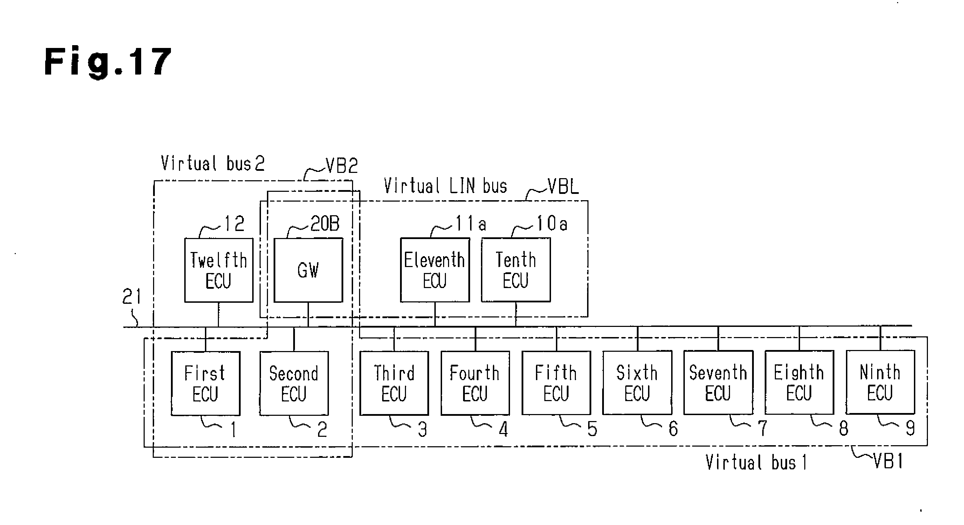

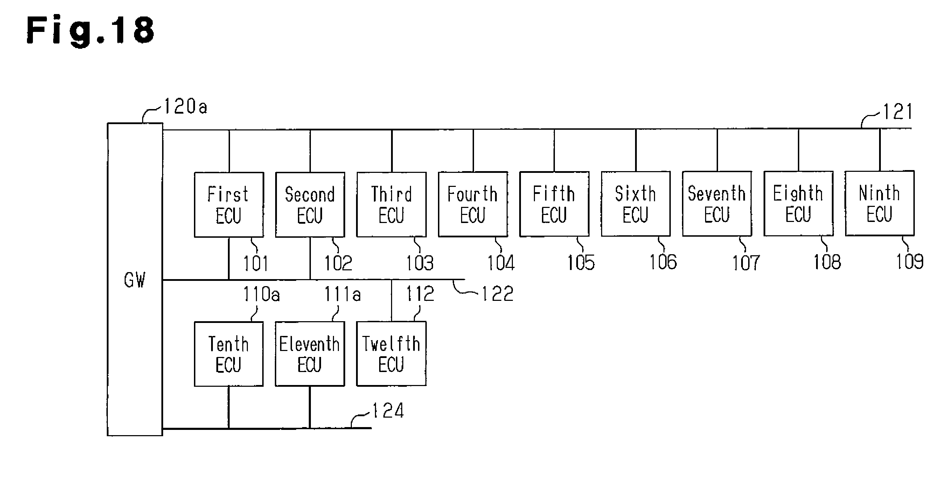

Figs. 17 and 18 illustrate a communication system including communication devices according to a fourth embodiment of the present disclosure.

As compared to the communication system of the first embodiment, the communication system of the present embodiment has a difference in that the third frequency band F3 is used for a local interconnect network (LIN) protocol in place of the CAN protocol, and is the same in other aspects of the configuration, and therefore, the same structural elements will be denoted by the same reference signs, and detailed descriptions thereof will be omitted.

First, description will be given of an outline of the communication system.

As shown in Fig. 17, the communication bus 21 of the communication system is connected with first to ninth and twelfth ECUs 1 to 9 and 12 that communicate based on the CAN protocol, tenth and eleventh ECUs 10a and 11 a that communicate based on the LIN protocol, and a GW 20B that communicates based on the CAN protocol and LIN protocol to be capable of transmission and reception of a communication signal. That is, in the communication system, a first virtual bus VB1 that makes the first to ninth ECUs 1 to 9 mutually communication capable, a second virtual bus VB2 that makes the first, second, and twelfth ECUs 1, 2, and 12 mutually communication capable, and a virtual LIN bus VBL that makes the tenth and eleventh ECUs 10a and 11 a mutually communication capable are constructed for each frequency band to be used for transmission and reception of communication data. The GW 20B processes transfer communication signals between the second and third virtual buses VB2 and VB3 and between the virtual LIN bus VBL and each of the first and second virtual buses VB1 and VB2.

Meanwhile, Fig. 18 shows, as a communication system of a comparative example, a system that is constructed by a CAN bus 121, a CAN bus 122, and a LIN bus 124, and transfers communication signals between the respective buses to each other via a GW 120a. That is, the communication system of the present embodiment is, for example, a system that can configure the common communication system described above by frequency division multiplexing.

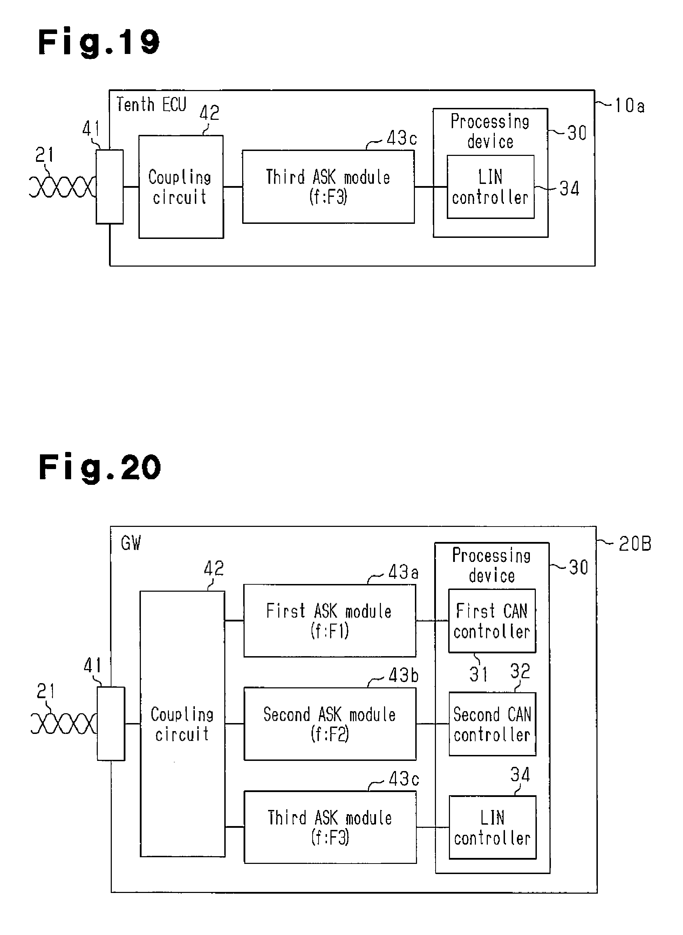

Figs. 19 to 20 illustrate details of the communication system. Since the tenth and eleventh ECUs 10a and 11 a are the same in configuration, description of the tenth ECU 10a will be given in the following, and description of the eleventh ECU 11 a will be omitted.

As shown in Fig. 19, as compared to the tenth ECU 10 of the first embodiment, the tenth ECU 10a has a difference in that the third CAN controller 33 is changed to a LIN controller 34, and is the same in configuration as the tenth ECU 10 of the first embodiment except for the difference. That is, the tenth ECU 10a can use a communication signal of the third communication band F3 for transmission and reception of communication data based on the LIN protocol.

The LIN controller 34 is a publicly-known controller capable of communication based on the LIN protocol, and the tenth ECU 10a is provided as a master node. That is, another LIN controller that communicates with the LIN controller 34 is set as a slave node. Specifically, the LIN controller provided in the eleventh ECU 11 a is set as a slave node.

As shown in Fig. 20, as compared to the GW 20 of the first embodiment, the GW 20B has a difference in that the third CAN controller 33 is changed to a LIN controller 34, and is the same in configuration as the GW 20 of the first embodiment except for the difference. That is, the GW 20B can use the first and second frequency bands F1 and F2 for transmission and reception of communication data based on the CAN protocol and use the third communication band F3 for transmission and reception of communication data based on the LIN protocol. Since the virtual LIN bus VBL includes the tenth ECU 10a as a master node, the LIN controller 34 of the GW 20B is provided as a slave node. Since the LIN is a protocol that is defined so that the slave node returns a response in reaction to a signal from the master node, i.e., since simultaneous transmission as in the CAN protocol does not occur, application of frequency division multiplexing communication is easy.

The processing device 30 of the GW 20B stores a transfer processing program to perform a transfer processing of communication information, and the processing device 30 performs a transfer processing of communication information based on execution of the transfer processing program. That is, the processing device 30 causes communication information received through any of the first and second CAN controllers 31 and 32 and the LIN controller 34 to be transmitted from a controller out of the first and second CAN controller 31, 32 and the LIN controller 34 through which the communication information has not been obtained.

The communication system accordingly enables mutual communication (transmission and reception) of various information to be used for control among the first to ninth, and twelfth ECUs 1 to 9 and 12 and the tenth and eleventh ECUs 10a and 11 a via the communication bus 21.

As described above, according to the communication device and communication system of the present embodiment, the following advantage is obtained in addition to the advantages described in (1) to (5) of the first embodiment described above.
(8) Not only the first and second virtual buses VB1 and VB2 based on the CAN protocol, but also the virtual LIN bus VBL based on the LIN protocol can be provided using the communication bus 21. Therefore, even a communication system using two or more protocols can be reduced in the number of wirings.

### Fifth Embodiment

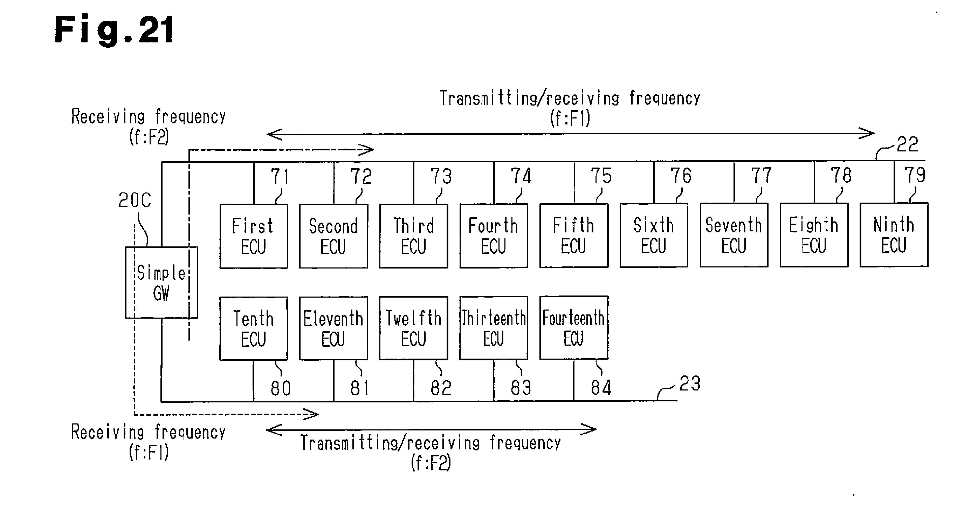

Figs. 21 to 25 illustrate a communication system including communication devices according to a fifth embodiment of the present disclosure. The communication system of the present embodiment is configured basically as a CAN. On the other hand, this communication system is a communication system that, in order to increase the communication capacity, uses CAN communication specifications while causing communications by so-called frequency division multiplexing, in which two or more communication signals based on the CAN protocol are transmitted to the first and second communication buses 22 and 23 respectively at the same time and in different frequency bands. Transmitter modules and receiver modules provided in the ECUs and GW of the present embodiment are the same in configuration as the transmitter modules 60 and the receiver modules 50 provided in the ECUs and GW of the first embodiment, the same structural elements will be denoted by the same reference signs, and detailed descriptions thereof will be omitted.

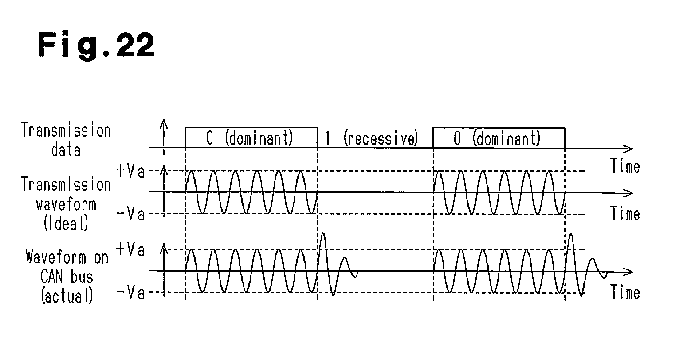

Figs. 21 and 22 illustrate an outline of the communication system of the present embodiment.

As shown in Fig. 21, the communication system includes first to ninth ECUs 71 to 79 serving as communication devices that are connected to a first communication bus 22, tenth to fourteenth ECUs 80 to 84 serving as communication devices that are connected to a second communication bus 23, and a GW 20C that is connected to the first and second communication buses 22 and 23.

The respective first and second communication buses 22 and 23 are buses using twisted pair cables having electrical characteristics compatible with CAN protocol transmission, and have characteristics also capable of transmitting a signal of a higher frequency band than the frequency band that is used exclusively by the CAN protocol.

As shown in Fig. 21, the first to ninth ECUs 71 to 79 use, in the first communication bus 22, the first communication band F1 as a transmission/reception frequency band and the second frequency band F2 as a reception-only frequency band. The tenth to fourteenth ECUs 80 to 84 use, in the second communication bus 23, the second communication band F2 as a transmission/reception frequency band and the first frequency band F1 as a reception-only frequency band. Meanwhile, the first frequency band F1 that is used by the first to ninth ECUs 71 to 79 for transmission and reception of communication signals and the second frequency F2 that is used by the tenth to fourteenth ECUs 80 to 84 for transmission and reception of communication signals are different frequency bands, it is also possible to connect those ECUs to a single communication bus to cause frequency division multiplexing communication.

Meanwhile, as a communication signal that is transmitted to a communication bus, it is normally ideal that, as shown by transmission waveform (ideal) in Fig. 22, a corresponding signal (carrier wave) is transmitted for only a period in response to a period corresponding to a logic 0 or 1. However, a bus made of a twisted pair cable compatible with the CAN protocol can, when a large number of ECUs are connected thereto, cause a degradation in the quality of a transmission signal due to degradation in bus performance. Therefore, if distortion occurs in the waveform of an amplitude-modulated signal, such a situation occurs in that, as shown by waveform on CAN bus (actual) in Fig. 22, the signal disappears delayed behind the end of the period of a bit length corresponding to a logic 0. Particularly, as in the present embodiment, in the case of a communication system made to be able to detect a logic 0 having a short length, if such a delay as described above greatly occurs in a communication signal that is transmitted through the communication bus, there is a concern of a degradation in communication accuracy, such that the CAN controller detects a logic 0 in the period of a logic 1.

In the present embodiment, the number of ECUs that are connected to the first and second communication buses 22 and 23 is accordingly restricted so that the performance (signal transmission characteristics) of the first and second communication buses 22 and 23 is not greatly degraded. On the other hand, since it is necessary to connect a large number of ECUs to each other to be mutually communication capable, those ECUs are dispersedly connected to the first and second communication buses 22 and 23, and the first and second communication buses 22 and 23 are connected to the GW 20C that causes mutual transfer of a communication signal between the communication buses.

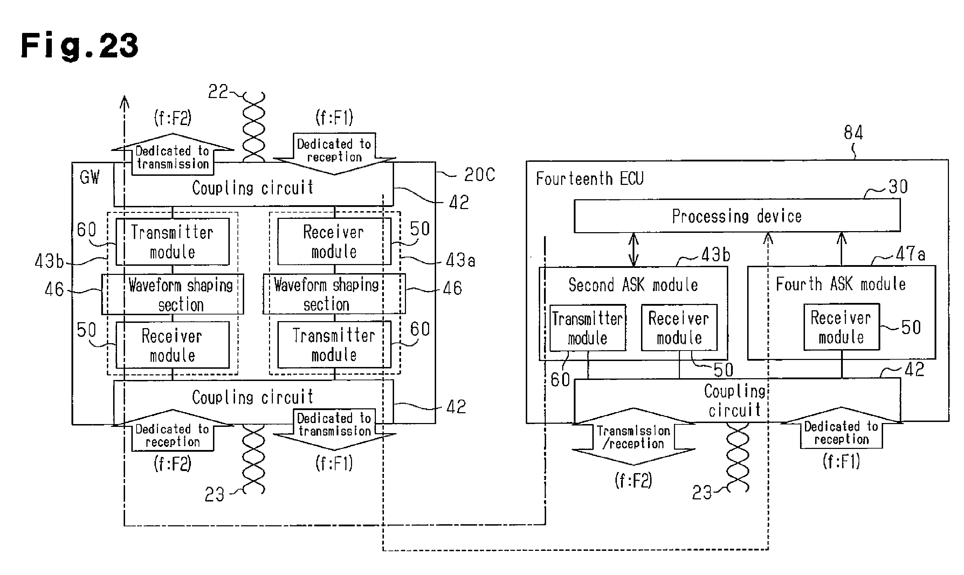

Figs. 23 to 25 illustrate details of the communication system of the present embodiment. The first to ninth ECUs 71 to 79 have the first frequency band F1 as a transmission/reception frequency band and have the second frequency band F2 as a reception-only frequency. That is, as compared to the first ECU 1 of the first embodiment, since the first to ninth ECUs 71 to 79 are different in that the second ASK module 43b is only for reception and are the same in other aspects of the configuration, detailed descriptions thereof will be omitted. That is, in the first to ninth ECUs 71 to 79, only receiver modules are provided for the ASK module corresponding to the second frequency band F2 (not shown) and no transfer modules are provided. Accordingly, the first to ninth ECUs 71 to 79 can use the first frequency band F1 for transmission and reception of communication data via the first communication bus 22, and use the second frequency band F2 for reception of communication data.

Since the tenth to fourteenth ECUs 80 to 84 are all the same in configuration, in the following, detailed description of the fourteenth ECU 84 will be given, and description of other tenth to thirteenth ECUs 80 to 83 will be omitted.

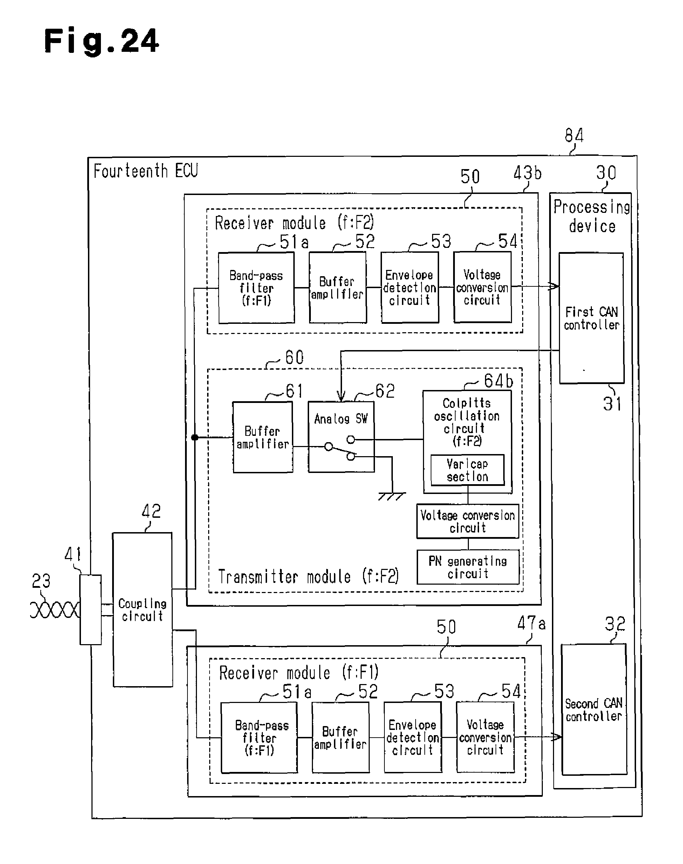

As shown in Figs. 23 and 24, the fourteenth ECU 84 can transmit and receive communication data based on the CAN protocol via the first CAN controller 31 provided in the processing device 30, and can receive communication data based on the CAN protocol via the second CAN controller 32 provided in the same processing device 30.

The fourteenth ECU 84 includes a second ASK module 43b that is connected to the first CAN controller 31, a fourth ASK module 47a that is connected to the second CAN controller 32, and a coupling circuit 42 that is connected to the second and fourth ASK modules 43b and 47a and connected to the second communication bus 23 via a connector 41. The second ASK module 43b includes a receiver module 50 and a transmitter module 60 respectively corresponding to the second frequency band F2. The fourth ASK module 47a includes only a receiver module 50 corresponding to the first frequency band F1. Accordingly, the fourteenth ECU 84 can use the second frequency band F2 for transmission and reception of communication data via the second communication bus 23, and use the first frequency band F1 for reception of communication data.

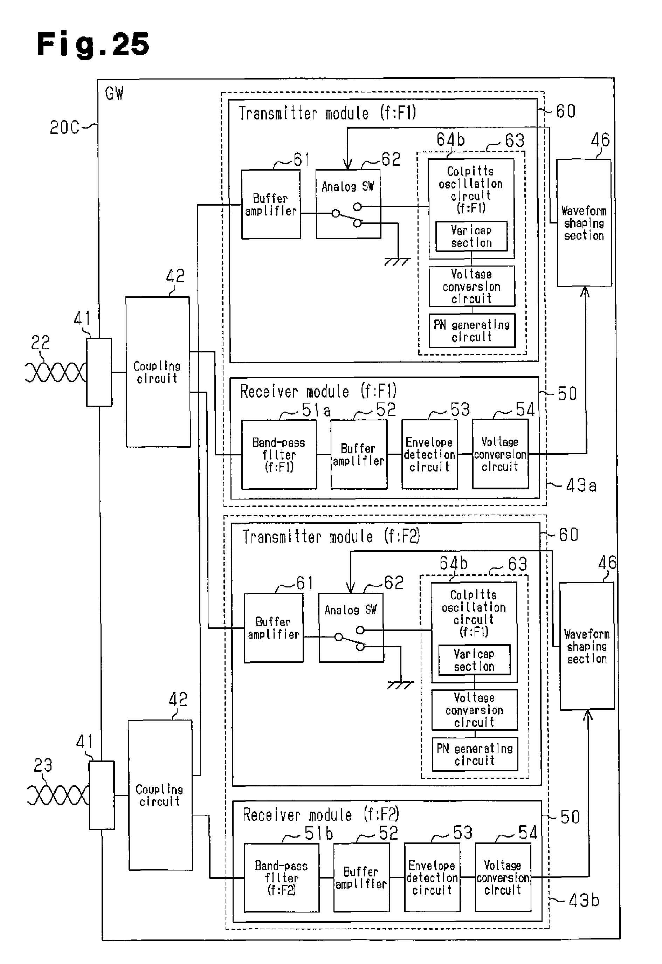

As shown in Figs. 23 and 25, for the GW 20C, a first coupling circuit 42 that is connected to the first communication bus 22 via a connector 41, a second coupling circuit 42 that is coupled to the second communication bus 23 via a connector 41, a first ASK module 43a, and a second ASK module 43b are provided. In the first and second ASK modules 43a and 43b, between a communication data output of the receiver module 50 and a communication data input of the transmitter module 60 of those, waveform shaping sections 46 are respectively provided. The waveform shaping section 46 is a section that inputs communication data into which a received communication signal has been demodulated to shape distortion in waveform caused by communication to be compatible with a voltage of the CAN protocol and switching timing, and outputs communication data after shaping. That is, the GW 20C retransmits demodulated communication data after correcting signal distortion that occurred in the communication data by the waveform shaping section 46.

In the GW 20C, an output of the first coupling circuit 42 is connected to the receiver module 50 of the first ASK module 43a, an output of the receiver module 50 is connected to an input of the transmitter module 60 of the first ASK module 43a via the waveform shaping section 46, and an output of the transmitter module 60 is connected to the second coupling circuit 42. In the GW 20C, an output of the second coupling circuit 42 is connected to the receiver module 50 of the second ASK module 43b, an output of the receiver module 50 is connected to an input of the transmitter module 60 of the second ASK module 43b via the waveform shaping section 46, and an output of the transmitter module 60 is connected to the first coupling circuit 42.

That is, when a communication signal amplitude-modulated in the first frequency band F1 is input to the GW 20C via the first communication bus 22, the GW 20C obtains communication data corresponding to the CAN protocol by receiving and demodulating the communication signal. The GW 20C, after shaping the waveform of communication data, amplitude-modulates the communication data at a frequency of the first frequency band F1 for retransmission to the second communication bus 23. That is, the communication signal of the first frequency band F1 transmitted to the first communication bus 22 is transferred to the second communication bus 23.

Similarly, when a communication signal amplitude-modulated at a frequency of the second frequency band F2 is input to the GW 20C via the second communication bus 23, the GW 20C obtains communication data corresponding to the CAN protocol by receiving and demodulating the communication signal. The GW 20C, after shaping the waveform of communication data, amplitude-modulates the communication data at a frequency of the second frequency band F2 for retransmission to the first communication bus 22. That is, the communication signal of the second frequency band F2 transmitted to the second communication bus 23 is transferred to the second communication bus 23.

Accordingly, since the number of transmitter modules 60 and receiver modules 50 to be provided for the GW 20C can be made to the minimum number necessary for transmitting a communication signal from a bus to receive the signal to a bus to cause transmission, the configuration of the GW 20C can be simplified. That is, to the first communication bus 22, only the receiver module 50 corresponding to the first frequency band F1 is connected as a receiver module, and only the transmitter module 60 corresponding to the second frequency band F2 is connected as a transmitter module. To the second communication bus 23, only the receiver module 50 corresponding to the second frequency band F2 is connected as a receiver module, and only the transmitter module 60 corresponding to the first frequency band F1 is connected as a transmitter module.

As described above, according to the communication device and communication system of the present embodiment, the following advantages are obtained in addition to the effects described in (1) to (5) of the first embodiment described above.
(9) By restricting the number of ECUs that are connected to the first and second communication buses 22 and 23, degradation in the performance of the communication bus can be reduced to suppress distortion of a communication signal on the communication bus.
(10) The GW 20C is provided as a structure that transfers a communication signal of the frequency band F1 from the first communication bus 22 to the second communication bus 23 and a structure that transfers a communication signal of the frequency band F2 from the second communication bus 23 to the first communication bus 22. That is, the GW 20C can be provided as a simple structure that passes a communication signal from one communication bus to the other communication bus, without changing the communication signal in frequency band. Since the structure is simple, a delay in the communication signal can be reduced and the structure can be simplified, so that the cost can be held low.
(11) The first to ninth ECUs 71 to 79 are configured to perform transmission in only the frequency band F1 and perform reception in the two frequency bands F1 and F2. The tenth to fourteenth ECUs 80 to 84 are configured to perform transmission in only the frequency band F2 and perform reception in the two frequency bands F1 and F2. Accordingly, as compared with such a case that, for example, transmitter modules into two or more frequency bands are provided for each ECU, the configuration of the ECUs can be simplified, and the cost can be held low.

It is not necessary to provide for a communication bus a gateway to transfer a communication signal after changing the same in the frequency band. Therefore, the communication bus can be simplified. ECUs can receive any communication signals regardless of which frequency band those were transmitted in. Consequently, there is no such necessity for, for example, a GW or the like transmitting a single communication signal into two or more frequency bands in a duplicated manner, and congestion of communication signals in the communication bus can be prevented.

### Other Embodiments

The above-mentioned respective embodiments may also be carried out in, for example, the following modes.

In the above-mentioned fourth embodiment, a case in which the LIN controller 34 of the tenth ECU 10a is a master node is described as an example. However, the present invention is not limited thereto, and if one master node can be provided per one LIN bus, master nodes may be provided for other ECUs and the GW. Accordingly, the degree of flexibility in configuration of the communication system is improved.

In the above-mentioned first, second, fourth, and fifth embodiments, a case of providing a communication signal corresponding to a logic 0 as a carrier wave and providing a communication signal corresponding to a logic 1 as a ground level is described as an example. However, the present invention is not limited thereto, as long as communication signal transmission and arbitration can be appropriately performed, a communication signal corresponding to a logic 0 may be provided as a ground level and a communication signal corresponding to a logic 1 may be provided as a carrier wave. Accordingly, the flexibility in design of such a communication system is improved.

In the above-mentioned respective embodiments, a case in which the first to third frequency bands F1 to F3, three frequency bands are provided at the maximum is described as an example. However, the present invention is not limited thereto, there may be more than three frequency bands and may be one frequency band. Accordingly, the communication capacity of the communication bus can be adjusted.

In the above-mentioned respective embodiments, a case of using a twisted pair cable compatible with the CAN protocol for the communication bus is described as an example. However, the present invention is not limited thereto, and when a CAN protocol communication signal without amplitude modulation is not transmitted, that is, when only a communication signal after amplitude modulation is transmitted, a communication line to be used for the communication bus does not necessarily need to be compatible with the CAN protocol or does not necessarily need to be a twisted pair cable. In this case, if a buffer amplifier, coupling circuit, and the like compatible with the communication line are used, an amplitude-modulated communication signal can be satisfactorily transmitted and received even in the case of using a communication line. Accordingly, the degree of flexibility of the communication system is improved.

### Description of the Reference Numerals

1 to 12...first to twelfth electronic control units (ECUs), 10a...tenth ECU, 11 a...eleventh ECU 20, 20A, 20B, 20C...gateways (GWs), 21...communication bus, 22...first communication bus 23...second communication bus, 30...processing device, 31 to 33...first to third CAN controllers, 34...LIN controller, 41...connector, 42...coupling circuit, 43a...first ASK module, 43b...second ASK module, 43c...third ASK module, 44...CAN transceiver, 45...low-pass filter, 46...waveform shaping section, 47a...fourth ASK module, 50...receiver module, 51 a...band-pass filter, 52...buffer amplifier, 53...envelope detection circuit, 54...voltage conversion circuit, 60...transmitter module, 61...buffer amplifier, 62...analog switch, 63...modulated wave generating module, 64a...Colpitts oscillation circuit, 65...varicap section, 66...voltage conversion circuit, 67...pseudorandom noise code generating circuit, 71 to 79...first to ninth ECUs, 80 to 84...tenth to fourteenth ECUs, 90...vehicle, VB1...first virtual bus, VB2...second virtual bus, VB3...third virtual bus, VBL...virtual LIN bus.

## Claims

1. A communication device that is connected to a communication line and configured to transmit and receive communication data via the communication line, the communication device comprising:
a transmitting section for transmitting a communication signal into which the communication data is modulated to the communication line; and
a receiving section for obtaining communication data by demodulating the communication signal received from the communication line, wherein
the transmitting section is configured to modulate the communication data based on a frequency that varies dynamically within a predetermined transmission frequency band, and
the receiving section is configured to obtain the communication data by demodulating the received modulated communication signal corresponding to the frequency band.

2. The communication device according to claim 1, wherein the dynamically changing frequency is determined based on a pseudorandom noise code.

3. The communication device according to claim 1 or 2, wherein
the communication line is a communication line based on a standard for a control area network, and
the communication data is communication data based on a protocol of the control area network.

4. The communication device according to claim 3, wherein the receiving section is configured to determine a signal level corresponding to 1 bit of the control area network protocol based on a communication signal detected within a period of a signal length of 1 bit of the protocol.

5. The communication device according to claim 4, wherein the signal level is determined to be dominant on condition that a communication signal exceeding a predetermined threshold has been detected within the period of the signal length of 1 bit, and determined to be recessive on condition that the determination to be dominant has not been made.

6. A communication system comprising a plurality of communication devices which are communicably connected to a network, wherein
at least two of the communication devices each include a transmitting section for transmitting a communication signal to the network, wherein the transmitting section is configured to transmit as the communication signal communication data modulated based on a frequency that varies dynamically within a predetermined transmission frequency band,
at least one the communication devices includes a receiving section for obtaining communication data by demodulating a demodulated communication signal obtained from the network based on the transmission frequency band, and
the transmitting section is configured to control transmission of a communication signal from the transmitting section based on a comparison of a communication signal transmitted from the transmitting section and a signal being transmitted to the network.

7. A communication method for transmitting communication data that is communicated over a control area network, wherein a controller that controls the communication over the control area network outputs communication data, the communication method comprising:
modulating the communication data output from the controller based on a frequency that varies dynamically within a predetermined transmission frequency band; and
transmitting the modulated communication data to the control area network.

8. A communication method for receiving communication data that is communicated over a control area network, wherein a controller controls communication over the control area network, the communication method comprising:
receiving from the control area network a communication signal modulated based on a frequency that varies dynamically within a predetermined frequency band;
demodulating the received communication signal in the predetermined frequency band; and
outputting the demodulated communication signal to the controller as communication data.

9. A communication device that is communicably connected to a control area network, a controller controlling communication over the control area network, wherein
the communication device is configured to modulate communication data output from the controller based on a frequency that varies dynamically within a predetermined transmission frequency band, and
the communication device is configured to transmit the modulated communication data to the control area network.

10. The communication device according to claim 9, wherein the dynamically changing frequency is determined based on a pseudorandom noise code.

11. A communication device that is communicably connected to a control area network, a controller controlling communication over the control area network, wherein
the communication device is configured to receive from the control area network a communication signal modulated based on a frequency that varies dynamically within a predetermined frequency band,
the communication device is configured to obtain communication data by demodulating the received communication signal in the predetermined frequency band, and
the communication device is configured to output the demodulated communication data to the controller.

12. The communication device according to claim 11, wherein
the communication data is communication data based on a protocol of the control area network, and
a signal level of the communication data is determined to a signal level corresponding to 1 bit of the protocol based on a communication signal detected within a period of a signal length of 1 bit of the protocol.
